# EUROPEAN PATENT APPLICATION

(11) **EP 4 403 245 A1**
(43) Date of publication of application: **24.07.2024**
(21) Application number: 22869895.7
(22) Date of filing: 08.09.2022
(51) Int. Cl.: B01D 53/14, B01D 53/62, B01J 20/26, C08G 65/333, C08L 71/03

(54) **CARBON DIOXIDE ABSORBER**

(30) Priority: 15.09.2021 JP 2021150223
(71) Applicant: Zeon Corporation, Tokyo 100-8246 (JP)
(72) Inventor: HAYANO, Shigetaka, Tokyo 100-8246 (JP)
(74) Representative: Maiwald GmbH
(86) International application number: PCT/JP2022/033751
(87) International publication number: WO 2023/042748

(57) **Abstract**

Provided is a carbon dioxide absorber comprising a polyether compound, wherein the polyether compound contains an average of 50 or more repeating units represented by General Formula (1) set forth in the description per molecule, and the polyether compound contains a repeating unit represented by General Formula (2) set forth in the description as at least part of the repeating units represented by General Formula (1).

## Description

### TECHNICAL FIELD

The present invention relates to a carbon dioxide absorber, and more specifically relates to a carbon dioxide absorber which has high carbon dioxide absorbency and is less likely to drop off from a porous membrane when it is held by the porous membrane.

### BACKGROUND ART

A polyether compound having a cationic group, which has ion conductivity, is known to be used as an electrolyte to provide ion conductivity between electrodes, for example, in electrochemical devices such as secondary cells, fuel cells, dye sensitized solar cells, and actuators.

For example, Patent Document 1 proposes an electrolyte composition characterized by containing a polyalkylene oxide having a side chain having a cation site in the polyalkylene oxide main chain, and a counter ion of the side chain, wherein the side chain or its counter ion is liquid crystalline.

### RELATED ART DOCUMENTS

### PATENT DOCUMENTS

Patent Document 1: JP 2002-246066 A

### SUMMARY OF THE INVENTION

### PROBLEM TO BE SOLVED BY THE INVENTION

An object of the present invention is to provide a carbon dioxide absorber which has high carbon dioxide absorbency and is less likely to drop off from a porous membrane when it is held by the porous membrane.

### MEANS FOR SOLVING PROBLEMS

The present inventor has attempted to use a polyether compound having a cationic group as a carbon dioxide absorber. However, this attempt has revealed that conventional polyether compounds having a cationic group have insufficient carbon dioxide absorbency. Those conventional polyether compounds having a cationic group, when held by porous membranes, are likely to drop off from the porous membranes. Thus, the present inventor, who has conducted extensive research to achieve the above object, has found that a carbon dioxide absorber having high carbon dioxide absorbency is obtained by using a polyether compound containing a specific number or more of repeating units represented by General Formula (1) described later and a repeating unit containing a nitrogen-containing cationic group represented by General Formula (2) described later, and further found that use of such a polyether compound results in a reduction in drop off of the carbon dioxide absorber from a porous membrane when it is held by the porous membrane. The present invention has been completed as a result of such examinations.

Specifically, the present invention provides a carbon dioxide absorber comprising a polyether compound, wherein the polyether compound contains an average of 50 or more repeating units represented by General Formula (1) below per molecule, and the polyether compound contains a repeating unit represented by General Formula (2) below as at least part of the repeating units represented by General Formula (1). 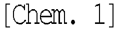 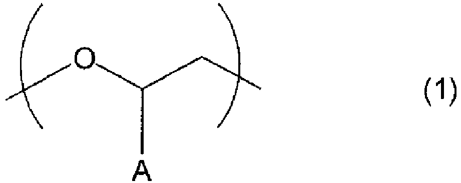 (where in General Formula (1), A represents a monovalent group.) 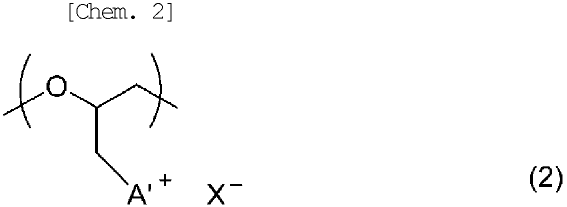 (where in General Formula (2), A'⁺ represents a nitrogen-containing cationic group; and in General Formula (2), X⁻ represents an anion.)

In the carbon dioxide absorber according to the present invention, preferably, the repeating unit represented by General Formula (2) is a repeating unit represented by General Formula (3-1) below, a repeating unit represented by General Formula (3-2) below, or a repeating unit represented by General Formula (4) below. 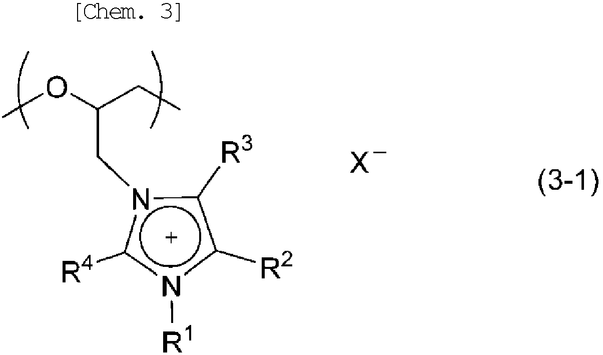 (where in General Formula (3-1), R¹ to R⁴ each independently represent a hydrogen atom or a substituent, and R² and R³ may be bonded to each other; and in General Formula (3-1), X⁻ represents an anion.) 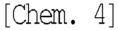 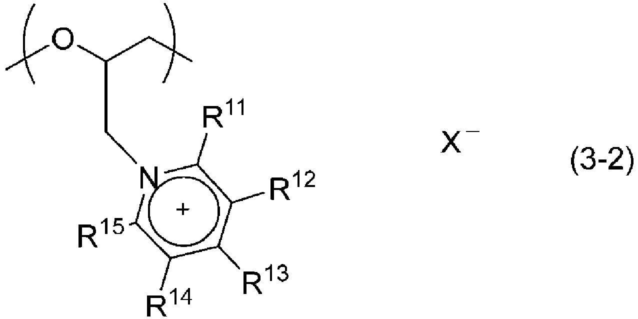 (where in General Formula (3-2), R¹¹ to R¹⁵ each independently represent a hydrogen atom or a substituent, and any two selected from R¹¹ to R¹⁵ may be bonded to each other; and in General Formula (3-2), X⁻ represents an anion.) 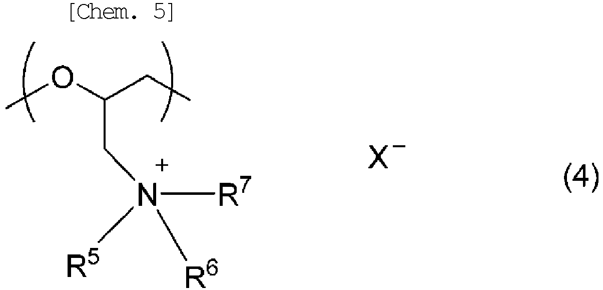 (where in General Formula (4), R⁵ to R⁷ each independently represent a hydrogen atom or a substituent, and R⁶ and R⁷ may be bonded to each other; and in General Formula (4), X⁻ represents an anion.)

In the carbon dioxide absorber according to the present invention, preferably, the polyether compound contains an average of 101 or more repeating units represented by General Formula (1) per molecule.

In the carbon dioxide absorber according to the present invention, preferably, the proportion of the repeating units represented by General Formula (1) in the polyether compound is 90 to 100 mol% relative to the entire repeating units in the polyether compound.

In the carbon dioxide absorber according to the present invention, the proportion of the repeating unit represented by General Formula (2) in the polyether compound is 5 to 100 mol% relative to the entire repeating units represented by General Formula (1).

Preferably, the carbon dioxide absorber according to the present invention further comprises an ion liquid or an oxygen-containing polar organic solvent.

In the carbon dioxide absorber according to the present invention, preferably, in the General Formula (2), X⁻ each independently represents an anion selected from the group consisting of halide ions, sulfonyl imidide ions, carboxylate ions, sulfonate ions, OH⁻, BF₄⁻, PF₆⁻, ClO₄⁻, B(CN)₄⁻, SCN⁻, and (NC)₂N⁻.

### EFFECTS OF INVENTION

The present invention provides a carbon dioxide absorber which has high carbon dioxide absorbency and is less likely to drop off from a porous membrane when it is held by the porous membrane.

### DESCRIPTION OF EMBODIMENTS

The carbon dioxide absorber according to the present invention comprises a polyether compound described later.

The polyether compound used in the present invention contains an average of 50 or more repeating units represented by General Formula (1) below per molecule, and contains a repeating unit represented by General Formula (2) below as at least part of the repeating units represented by General Formula (1). 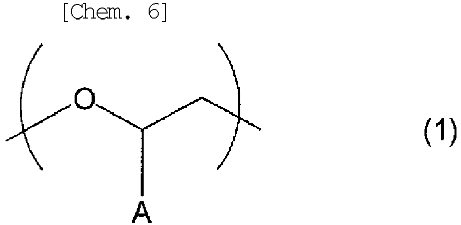 (where in General Formula (1), A represents a monovalent group.) 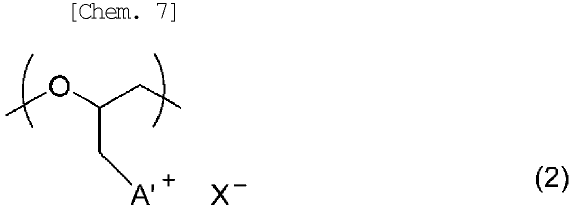 (where in General Formula (2), A'⁺ represents a nitrogen-containing cationic group; and in General Formula (2), X⁻ represents an anion.)

The polyether compound used in the present invention contains a relatively large number of, i.e., an average of 50 or more repeating units (oxirane units) represented by General Formula (1) per molecule, and contains an oxirane unit containing a nitrogen-containing cationic group represented by General Formula (2). Use of such a polyether compound results in a carbon dioxide absorber used in the present invention which has high carbon dioxide absorbency and is less likely to drop off from a porous membrane when it is held by the porous membrane.

The repeating unit represented by General Formula (1) is a unit (oxirane monomer unit) obtained by ring-opening polymerization of an oxirane structure portion in a compound having an oxirane structure. Examples of the compound having an oxirane structure include aliphatic oxirane monomers such as ethylene oxide, propylene oxide, 1,2-butylene oxide, and 1,2-octylene oxide; aromatic oxirane monomers such as styrene oxide; epihalohydrin monomers such as epichlorohydrin, epibromohydrin, epiiodohydrin, and epifluorohydrin; alkenyl group-containing oxirane monomers such as allyl glycidyl ether; aromatic ether group-containing oxirane monomers such as phenyl glycidyl ether; (meth)acryloyl group-containing oxirane monomers such as glycidyl acrylate and glycidyl methacrylate; and the like. These compounds having an oxirane structure may be used alone or in combination.

The polyether compound used in the present invention contains an oxirane unit containing a nitrogen-containing cationic group represented by General Formula (2) as at least part of the repeating units represented by General Formula (1).

The repeating unit represented by General Formula (2) is generally obtained by substituting at least part of the halogen atoms constituting epihalohydrin monomer units in a polymer containing the epihalohydrin monomer units by a nitrogen-containing cationic group.

In General Formula (2), A'⁺ represents a nitrogen-containing cationic group. The nitrogen-containing cationic group is preferably bonded to the carbon atom in the "2" position shown in a general formula below via one nitrogen atom constituting the nitrogen-containing cationic group. The nitrogen-containing cationic group may have a different nitrogen atom other than the nitrogen atom bonded to the carbon atom in the "2" position shown in the general formula below.

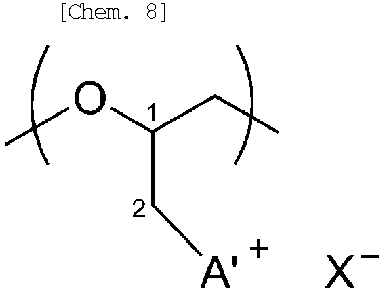

Examples of the nitrogen-containing cationic groups represented by A'⁺ include an amino group, nitrogen-containing cationic aromatic groups, and nitrogen-containing cationic aliphatic groups.

The nitrogen-containing cationic aromatic groups for A'⁺ are preferably groups containing a cationic nitrogen-containing aromatic heterocycle. It is sufficient that the nitrogen-containing aromatic heterocycle for the cationic nitrogen-containing aromatic heterocycle in the groups containing a cationic nitrogen-containing aromatic heterocycle has a nitrogen atom in the ring and has aromaticity, and the nitrogen-containing aromatic heterocycle may have a heteroatom other than the nitrogen atom, such as an oxygen atom or a sulfur atom, and part of atoms constituting the heterocycle may be substituted by a substituent. The nitrogen-containing aromatic heterocycle may have a polycyclic structure formed of two or more rings fused. Examples of such a structure of the nitrogen-containing aromatic heterocycle include five-membered heterocycles such as an imidazole ring, a pyrrole ring, a thiazole ring, an oxazole ring, a pyrazole ring, and an isoxazole ring; six-membered heterocycles such as a pyridine ring, a pyrazine ring, a pyrimidine ring, a pyridazine ring, and a triazine ring; fused heterocycles such as a quinoline ring, an isoquinoline ring, a quinoxaline ring, a quinazoline ring, a cinnoline ring, a purine ring, an indole ring, an isoindole ring, a benzimidazole ring, a benzoxazole ring, and a benzisoxazole ring; and the like. Among these, preferred are five-membered heterocycles and six-membered heterocycles, and more preferred is an imidazole ring.

Examples of substituents for the nitrogen-containing aromatic heterocycle include, but are not particularly limited to, alkyl groups; cycloalkyl groups; alkenyl groups such as a vinyl group; aryl groups such as a phenyl group; arylalkyl groups; alkylaryl groups; alkoxyl groups; alkoxyalkyl groups; aryloxy groups; alkanol groups; a hydroxyl group; a carbonyl group; alkoxycarbonyl groups; an amino group; an imino group; a nitrile group; alkylsilyl groups; halogen atoms; and the like. These substituents have preferably 0 to 12, more preferably 1 to 8, still more preferably 1 to 6 carbon atoms.

The nitrogen-containing cationic aliphatic group for A'⁺ may be straight-chained or branched-chained, or may have a non-aromatic ring structure.

Specific examples of the nitrogen-containing cationic group represented by A'⁺ include an ammonium group; cationic mono-substituted ammonium groups containing a nitrogen atom, such as a methyl ammonium group, a butylammonium group, a cyclohexylammonium group, an anilinium group, a benzylammonium group, and an ethanolammonium group; cationic di-substituted ammonium groups containing a nitrogen atom, such as a dimethylammonium group, a diethylammonium group, a dibutylammonium group, and a nonylphenylammonium group; cationic tri-substituted ammonium groups containing a nitrogen atom, such as a trimethylammonium group, a triethylammonium group, an n-butyldimethylammonium group, a stearyldimethylammonium group, a tributylammonium group, a trivinylammonium group, a triethanolammonium group, an N,N-dimethylethanolammonium group, and a tri(2-ethoxyethyl)ammonium group; cationic heterocyclic groups containing a nitrogen atom, such as a piperidinium group, a 1-methylpyrolidinium group, a 1-butylpyrolidinium group, an imidazolium group, a 1-methylimidazolium group, a 1-ethylimidazolium group, a 1-butyl-imidazolium group, a benzimidazolium group, a pyrrolium group, a 1-methylpyrrolium group, an oxazolium group, a benzoxazolium group, a pyrazolium group, an isoxazolium group, a pyridinium group, a 2,6-dimethylpyridinium group, a pyrazinium group, a pyrimidinium group, a pyridazinium group, a triazinium group, an N,N-dimethylanilinium group, a quinolinium group, an isoquinolinium group, an indoliniumgroup, a quinoxalium group, and an isoquinoxalium group; and the like. Among these, preferred are cationic tri-substituted ammonium groups containing a nitrogen atom and cationic heterocyclic groups containing a nitrogen atom.

In General Formula (2), the anion represented by X⁻ is a counter anion for the nitrogen-containing cationic group represented by A'⁺. Examples of monovalent anions for X⁻ include halide ions such as F⁻, Cl⁻, Br⁻, and I⁻; sulfonyl imidide ions such as (FSO₂)₂N⁻, (CF₃SO₂)₂N⁻, and (CF₃CF₂SO₂)₂N⁻; carboxylate ions such as CH₃COO⁻, C₃H₇COO⁻, CF₃COO⁻, and PhCOO⁻(where Ph represents a phenyl group); sulfonate ions such as CH₃SO₃ and CF₃SO₃⁻; OH⁻, BF₄⁻, PF₆⁻, ClO₄, B (CN)₄⁻, SCN⁻, (NC)₂N⁻, and the like. X⁻ may be a polyvalent anion, or may be a polyanion having two or more monovalent anionic groups in the molecule. Examples of the polyvalent anion include a sulfate ion (SO₄²⁻) and a carbonate ion (CO₃²⁻). Examples of the polyanion having two or more monovalent anionic groups in the molecule include⁻O₃SCF₂CF₂CF₂SO₃⁻, -O₃SCF₂CF₂SO₃, CF₃SO₂N⁻SO₂CF₂CF₂OCF₂CF₂OCF₂CF₂SO₂N⁻SO₂CF₃, and the like. Among these, sulfonyl imidide ions, carboxylate ions, and BF₄⁻are preferred, and sulfonyl imide ions, CH₃COO⁻, and BF₄⁻ are more preferred from the viewpoint of carbon dioxide absorbency.

In the polyether compound used in the present invention, the units represented by General Formula (2) may be each independent, and two or more units represented by General Formula (2) may be present in the polyether compound. For example, in the entire repeating units represented by General Formula (2) in the polyether compound, all the nitrogen-containing cationic groups represented by A'⁺ may be the same nitrogen-containing cationic group, or different nitrogen-containing cationic groups may be present. In the entire repeating units represented by General Formula (2) in the polyether compound, all the anions represented by X⁻ may be the same anion, or different anions may be present.

Examples of the repeating unit represented by General Formula (2) include a repeating unit represented by General Formula (3-1) below. The repeating unit represented by General Formula (3-1) below is an oxirane unit having an imidazolium structure. 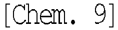 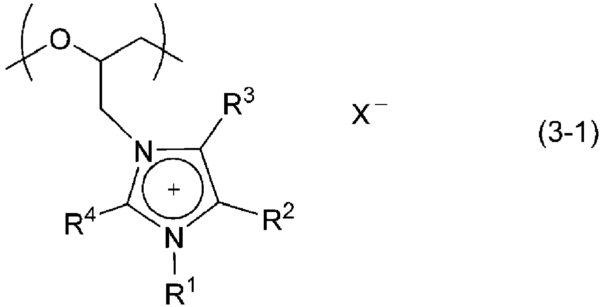 (where in General Formula (3-1), R¹ to R⁴ each independently represent a hydrogen atom or a substituent, and R² and R³ may be bonded to each other; and in General Formula (3-1), X⁻ represents an anion.)

In General Formula (3-1), R¹ to R⁴ each independently represent a hydrogen atom or a substituent. Examples of the substituent include the same substituents as those for the nitrogen-containing aromatic heterocycle listed above. The substituents for R¹ to R⁴ may be straight-chained or branched-chained, or may have a ring structure. The substituents for R¹ to R⁴ are preferably straight-chained.

In General Formula (3-1), it is sufficient that R¹ is a hydrogen atom or a substituent. Although R¹ is not particularly limited, R¹ is preferably a hydrogen atom or a hydrocarbon group, more preferably a hydrocarbon group, still more preferably an alkyl group or an alkenyl group, particularly preferably an alkyl group or a vinyl group, most preferably an alkyl group. From the viewpoint of carbon dioxide absorbency, R¹ has preferably 0 to 12, more preferably 0 to 8, still more preferably 1 to 6, further still more preferably 1 to 4, particularly preferably 1 to 3, most preferably 1 to 2 carbon atoms.

In General Formula (3-1), it is sufficient that R² to R⁴ are each independently a hydrogen atom or a substituent. Although R² to R⁴ are not particularly limited, R² to R⁴ are each independently preferably a hydrogen atom or a hydrocarbon group, more preferably a hydrogen atom, an alkyl group, or a vinyl group, still more preferably a hydrogen atom or an alkyl group, particularly preferably a hydrogen atom. From the viewpoint of carbon dioxide absorbency, R² to R⁴ each independently have preferably 0 to 8 carbon atoms, more preferably 0 to 6 carbon atoms, still more preferably 0 to 4 carbon atoms, further still more preferably 0 to 3 carbon atoms, particularly preferably 0 to 2 carbon atoms, most preferably 0 to 1 carbon atom.

In General Formula (3-1), R² and R³ may be bonded to each other. When R² and R³ are bonded to each other, the repeating unit represented by General Formula (3-1) has a group represented by -R²-R³-. In General Formula (3-1), preferably, R² and R³ are not bonded to each other.

In General Formula (3-1), it is preferred that 1 to 3 of R² to R⁴ represent a hydrogen atom, and is more preferred that 2 to 3 of them represent a hydrogen atom. It is also preferred that 0 to 2 of R² to R⁴ represent a substituent such as a hydrocarbon group, and is more preferred that 0 to 1 of them represent a substituent such as a hydrocarbon group.

Examples of the anion represented by X⁻ in General Formula (3-1) include the same anions as those represented by X⁻ in General Formula (2), and suitable examples are as described above.

The repeating unit represented by General Formula (3-1) is preferably a repeating unit containing an imidazolium group, a 1-methylimidazolium group, a 1-butylimidazolium group, a 1-hexylimidazolium group, or a 1-vinylimidazolium group.

Examples of the repeating unit represented by General Formula (2) include the repeating unit represented by General Formula (3-2) below. The repeating unit represented by General Formula (3-2) below is an oxirane unit having a pyridinium structure. 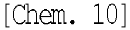 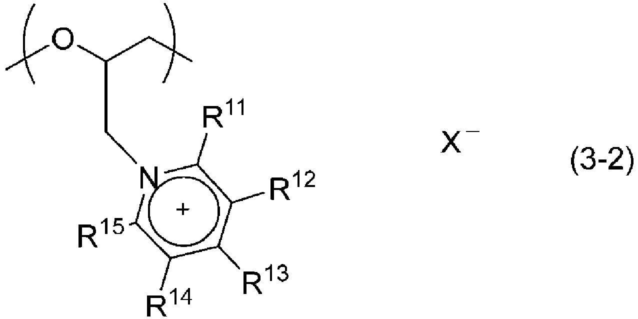 (where in General Formula (3-2), R¹¹ to R¹⁵ each independently represent a hydrogen atom or a substituent, and any two selected from R¹¹ to R¹⁵ may be bonded to each other; and in General Formula (3-2), X⁻ represents an anion.)

In General Formula (3-2), R¹¹ to R¹⁵ each independently represent a hydrogen atom or a substituent. Examples of the substituent include the same substituents as those for the nitrogen-containing aromatic heterocycle listed above. The substituents for R¹¹ to R¹⁵ may be straight-chained or branched-chained, or may have a ring structure.

In General Formula (3-2), it is sufficient that R¹¹ to R¹⁵ are each independently a hydrogen atom or a substituent. Although R¹¹ to R¹⁵ are not particularly limited, R¹¹ to R¹⁵ are each independently preferably a hydrogen atom or a hydrocarbon group, more preferably a hydrogen atom, an alkyl group, or a vinyl group, still more preferably a hydrogen atom or an alkyl group. From the viewpoint of carbon dioxide absorbency, R¹¹ to R¹⁵ each independently have preferably 0 to 8 carbon atoms, more preferably 0 to 6 carbon atoms, still more preferably 0 to 4 carbon atoms, further still more preferably 0 to 3 carbon atoms, particularly preferably 0 to 2 carbon atoms, most preferably 0 to 1 carbon atom.

In General Formula (3-2), any two selected from R¹¹ to R¹⁵ may be bonded to each other. For example, R¹¹ and R¹² may be bonded to each other to form a group represented by -R¹¹-R¹²-. In General Formula (3-2), it is preferred that none of R¹¹ to R¹⁵ be bonded to each other.

In General Formula (3-2), it is preferred that 2 to 5 of R¹¹ to R¹⁵ represent a hydrogen atom, is more preferred that 3 to 5 of them represent a hydrogen atom, is still more preferred that 4 to 5 of them represent a hydrogen atom, and is particularly preferred that all of them represent a hydrogen atom. It is also preferred that 0 to 3 of R¹¹ to R¹⁵ represent a substituent such as a hydrocarbon group, is more preferred that 0 to 2 of them represent a substituent such as a hydrocarbon group, and is still more preferred that 0 to 1 of them represent a substituent such as a hydrocarbon group.

Examples of the anion represented by X⁻ in General Formula (3-2) include the same anions as those represented by X⁻ in General Formula (2), and suitable examples are as described above.

The repeating unit represented by General Formula (3-2) is preferably a repeating unit containing a pyridinium group, a 2,6-dimethylpyridinium group, a 4-vinylpyridinium group, or a quinolinium group.

Examples of the repeating unit represented by General Formula (2) include the repeating unit represented by General Formula (4) below. 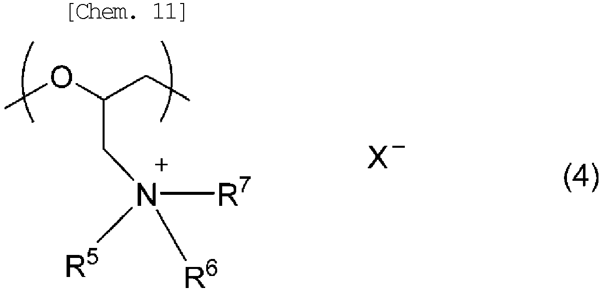 (where in General Formula (4), R⁵ to R⁷ each independently represent a hydrogen atom or a substituent, and R⁶ and R⁷ may be bonded to each other; and in General Formula (4), X⁻ represents an anion.)

In General Formula (4), R⁵ to R⁷ each independently represent a hydrogen atom or a substituent. Examples of the substituent include the same substituents as those for the nitrogen-containing aromatic heterocycle described above. Among these, preferred are alkyl groups, aryl groups, arylalkyl groups, alkylaryl groups, alkoxyl groups, alkoxyalkyl groups, aryloxy groups, and alkanol groups, more preferred are alkyl groups, cycloalkyl groups, phenyl groups, alkoxyalkyl groups, and alkanol groups, and still more preferred are alkyl groups or cycloalkyl groups. The substituents for R⁵ to R⁷ each independently may be straight-chained or branched-chained, or may have a ring structure.

In General Formula (4), it is sufficient that R⁵ is a hydrogen atom or a substituent. Although R⁵ is not particularly limited, R⁵ is preferably a straight-chained substituent. From the viewpoint of carbon dioxide absorbency, R⁵ has preferably 0 to 12 carbon atoms, more preferably 1 to 8 carbon atoms, still more preferably 1 to 6 carbon atoms, further still more preferably 1 to 4 carbon atoms, particularly preferably 1 to 3 carbon atoms, most preferably 1 to 2 carbon atoms.

In General Formula (4), R⁶ to R⁷ are not particularly limited, and it is sufficient that R⁶ to R⁷ each independently represent a hydrogen atom or a substituent. Further, R⁶ and R⁷ may or may not be bonded to each other.

In General Formula (4), when R⁶ and R⁷ are not bonded to each other, it is preferred that R⁶ be a straight-chained substituent. From the viewpoint of carbon dioxide absorbency, R⁶ has preferably 0 to 12 carbon atoms, more preferably 2 to 8 carbon atoms, still more preferably 3 to 6 carbon atoms, particularly preferably 3 to 5 carbon atoms.

When R⁶ and R⁷ are not bonded to each other, it is preferred that R⁷ be a straight-chained substituent. From the viewpoint of carbon dioxide absorbency, R⁷ has preferably 0 to 12 carbon atoms, more preferably 1 to 8 carbon atoms, still more preferably 1 to 6 carbon atoms, further still more preferably 1 to 4 carbon atoms, particularly preferably 1 to 3 carbon atoms, most preferably 1 to 2 carbon atoms.

In General Formula (4), when R⁶ and R⁷ are bonded to each other, the repeating unit represented by General Formula (4) has a group represented by -R⁶-R⁷-. The group represented by -R⁶-R⁷- may be straight-chained or branched-chained, or may have a ring structure. The group represented by -R⁶-R⁷- is preferably straight-chained. From the viewpoint of carbon dioxide absorbency, the group represented by -R⁶-R⁷- has preferably 1 to 12 carbon atoms, more preferably 2 to 8 carbon atoms, still more preferably 3 to 6 carbon atoms, particularly preferably 3 to 5 carbon atoms.

Examples of the anion represented by X⁻ in General Formula (4) include the same anions as those represented by X⁻ in General Formula (2), and suitable examples are as described above.

The repeating unit represented by General Formula (4) is preferably a repeating unit containing a trimethylammonium group, a triethylammonium group, an n-butyldimethylammonium group, an n-octyldimethylammonium group, n-stearyldimethylammonium group, a tributylammonium group, a trivinylammonium group, a 1-methylpyrolidinium group, an N,N'-dimethylanilinium group, a triethanolammonium group, an N,N'-dimethylethanolammonium group, or a tri(2-ethoxyethyl)ammonium group.

The repeating unit represented by General Formula (2) is preferably the repeating unit represented by General Formula (3-1), the repeating unit represented by General Formula (3-2), or the repeating unit represented by General Formula (4), and is more preferably the repeating unit represented by General Formula (3-1) or the repeating unit represented by General Formula (4).

The polyether compound used in the present invention may contain repeating units represented by General Formula (1) other than the repeating unit represented by General Formula (2). Examples of the repeating units represented by General Formula (1) other than the repeating unit represented by General Formula (2) include alkylene oxide monomer units such as an ethylene oxide unit, a propylene oxide unit, a 1,2-butylene oxide unit, and a 1,2-octylene oxide unit; aromatic oxirane monomer units such as a styrene oxide unit; epihalohydrin monomer units such as an epichlorohydrin unit, an epibromohydrin unit, and an epiiodohydrin unit; alkenyl group-containing oxirane monomer units such as an allyl glycidyl ether unit; aromatic ether group-containing oxirane monomer units such as a phenyl glycidyl ether unit; (meth)acryloyl group-containing oxirane monomer units such as a glycidyl acrylate unit and a glycidyl methacrylate unit; and the like. As the repeating units represented by General Formula (1) other than the repeating unit represented by General Formula (2), preferred are alkylene oxide monomer units, epihalohydrin monomer units, and (meth)acryloyl group-containing oxirane monomer units, and more preferred are an ethylene oxide unit, a propylene oxide unit, an epichlorohydrin unit, and a glycidyl methacrylate unit. The polyether compound used in the present invention may contain only one of these repeating units represented by General Formula (1) other than the repeating unit represented by General Formula (2), or may contain two or more of them.

The polyether compound used in the present invention may contain repeating units other than the repeating unit represented by General Formula (1). Examples of repeating units other than the repeating unit represented by General Formula (1) include oxirane monomer units having two or more substitutions, such as a 2,3-butylene oxide unit, and oxirane monomer units having a ring structure, such as cyclohexene oxide. The polyether compound used in the present invention may contain only one of these repeating units other than the repeating unit represented by General Formula (1), or may contain two or more of them.

The polyether compound used in the present invention may contain an oxirane monomer unit having a cross-linkable group. When the polyether compound used in the present invention contains a cross-linkable group, a cross-linkable composition can be prepared by compounding a cross-linking agent. Cross-linking this composition results in a cross-linked product which contains a cross-linked structure, and thus has improved shape retention when shaped in a predetermined shape. Examples of such an oxirane monomer unit having a cross-linkable group include, but are not particularly limited to, epihalohydrin monomer units, alkenyl group-containing oxirane monomer units, (meth)acryloyl group-containing oxirane monomer units, and the like.

The polyether compound used in the present invention may contain two or more types of repeating units. In this case, although a distribution pattern of those repeating units is not particularly limited, the repeating units preferably have a random distribution.

The chain structure of the polyether compound used in the present invention is not particularly limited, and may be a straight-chained structure, or may have a branched-chain structure such as a graft-branched structure or a radially branched structure.

The end group of the polyether compound used in the present invention is not particularly limited, and can be any monovalent group. Specific examples of groups as the end groups include a hydrogen atom, halogen groups, alkyl groups, haloalkyl groups, a hydroxyl group, an azide group, and the like. The group as the end group may be a group formed of a nitrogen-containing cationic group (A'⁺) and an anion (X⁻) contained in the repeating unit represented by General Formula (2).

The polyether compound used in the present invention contains an average of 50 or more repeating units represented by General Formula (1) per molecule. Although the polyether compound used in the present invention can have any number of repeating units represented by General Formula (1) as long as the average number per molecule is 50 or more, the average number per molecule is preferably 51 to 2000, more preferably 101 to 1000, still more preferably 110 to 800. When the number of repeating units represented by General Formula (1) falls within the ranges above, the carbon dioxide absorber according to the present invention can have higher carbon dioxide absorbency, and is further less likely to drop off from a porous membrane when it is held by the porous membrane.

The polyether compound used in the present invention has a number average molecular weight (Mn) of preferably 3,000 to 800,000, more preferably 4,000 to 400,000, still more preferably 8,000 to 300,000, although the number average molecular weight (Mn) is not particularly limited. When the number average molecular weight (Mn) falls within the ranges above, the carbon dioxide absorber according to the present invention is further less likely to drop off from a porous membrane when it is held by the porous membrane, while having high carbon dioxide absorbency.

The polyether compound used in the present invention has a molecular weight distribution (Mw/Mn) of preferably 1.0 to 4.0, more preferably 1.0 to 2.0, still more preferably 1.0 to 1.5, although the molecular weight distribution (Mw/Mn) is not particularly limited.

The proportion of repeating units represented by General Formula (1) in the polyether compound used in the present invention is not particularly limited, and is preferably 90 to 100 mol%, more preferably 95 to 100 mol%, most preferably substantially 100 mol% relative to the entire repeating units in the polyether compound. When the proportion of repeating units represented by General Formula (1) falls within the ranges above, the carbon dioxide absorber according to the present invention has higher carbon dioxide absorbency, and is further less likely to drop off from a porous membrane when it is held by the porous membrane.

Although the number of repeating units represented by General Formula (2) contained in the polyether compound used in the present invention is not particularly limited, the average number thereof per molecule is preferably 8 to 2000, more preferably 15 to 1000, still more preferably 20 to 900, particularly preferably 25 to 800. When the number of repeating units represented by General Formula (2) falls within the ranges above, the carbon dioxide absorber according to the present invention has higher carbon dioxide absorbency, and is further less likely to drop off from a porous membrane when it is held by the porous membrane.

The proportion of repeating units represented by General Formula (2) in the polyether compound used in the present invention is not particularly limited, and is preferably 5 to 100 mol%, more preferably 8 to 100 mol%, still more preferably 10 to 100 mol% relative to the entire repeating units represented by General Formula (1). When the proportion of repeating units represented by General Formula (2) falls within the ranges above, the carbon dioxide absorber according to the present invention has higher carbon dioxide absorbency, and is further less likely to drop off from a porous membrane when it is held by the porous membrane.

According to the present invention, for example, even when a polyether compound containing an average of 50 or more repeating units represented by General Formula (1) per molecule and a relatively small amount (e.g., 14 mol% or 29 mol%) of the repeating unit represented by General Formula (2) is used, unexpectedly, the carbon dioxide absorber according to the present invention has high carbon dioxide absorbency. Although the reason for this is not clarified, it is inferred that the carbon dioxide absorbency also depends on the mobility of the repeating unit represented by General Formula (2).

When higher carbon dioxide absorbency is required, the proportion of repeating units represented by General Formula (2) in the polyether compound used in the present invention is preferably 20 to 100 mol%, more preferably 50 to 100 mol%, still more preferably 80 to 100 mol%, further still more preferably 90 to 100 mol%, particularly preferably 95 to 100 mol%, most preferably substantially 100 mol% relative to the entire repeating units represented by General Formula (1).

The proportion of the repeating units represented by General Formula (1) other than the repeating unit represented by General Formula (2) in the polyether compound used in the present invention is not particularly limited, and is preferably 0 to 95 mol%, more preferably 0 to 92 mol%, still more preferably 0 to 90 mol% relative to the entire repeating units represented by General Formula (1).

When higher carbon dioxide absorbency is required, the proportion of the repeating units represented by General Formula (1) other than the repeating unit represented by General Formula (2) in the polyether compound used in the present invention is preferably 0 to 80 mol%, more preferably 0 to 50 mol%, still more preferably 0 to 20 mol%, further still more preferably 0 to 10 mol%, particularly preferably 0 to 5 mol%, most preferably substantially 0 mol% relative to the entire repeating units represented by General Formula (1).

The proportion of the oxirane monomer unit having a cross-linkable group in the polyether compound used in the present invention is not particularly limited, and is preferably 0 to 50 mol%, more preferably 0 to 20 mol% relative to the entire repeating units in the polyether compound. The lower limit of the proportion of the oxirane monomer unit having a cross-linkable group is not particularly limited. From the viewpoint of making the polyether compound used in the present invention into a cross-linkable composition, which is to be cross-linked to give a cross-linked product having improved shape retention, the lower limit thereof may be 1 mol% or more.

A method of synthesizing the polyether compound used in the present invention is not particularly limited, and any synthesis method can be used as long as the method can provide an intended polyether compound. One example of the synthesis method is shown as follows: First, a base polymer (polyether compound having no repeating unit represented by General Formula (2)) is obtained by the following method (A) or (B).

(A) A method of obtaining a base polymer, including ring-opening polymerization of an oxirane monomer-containing monomer that contains at least epihalohydrin such as epichlorohydrin, epibromohydrin, and epiiodohydrin, in the presence of a catalyst that contains an onium salt of a compound containing an atom from Group 15 or 16 of the periodic table and a trialkylaluminum in which alkyl groups contained are all straight-chained alkyl groups, which catalyst is disclosed in JP 2010-53217 A.

(B) A method of obtaining a base polymer, including ring-opening polymerization of an oxirane monomer-containing monomer that contains at least epihalohydrin such as epichlorohydrin, epibromohydrin, and epiiodohydrin, in the presence of a catalyst prepared by the reaction of triisobutylaluminum with phosphoric acid and triethylamine, which catalyst is disclosed in JP 46-27534 B.

Then, through a reaction (onium formation reaction) of halogen groups constituting the epihalohydrin monomer units of the base polymer obtained by the method (A) or (B) with an onium-forming agent containing a nitrogen-containing cationic group, at least part of the halogen groups constituting the epihalohydrin monomer units of the base polymer is converted to an onium halide group containing the nitrogen-containing cationic group, thereby obtaining an onium halide structural unit-containing polyether compound containing a repeating unit represented by General Formula (2) where the anion (X⁻) is a halide ion. Further, the resulting onium halide structural unit-containing polyether compound is reacted with a salt of an anion (X⁻) other than the halide ion and a metal cation, as needed, to perform an anion-exchange reaction. Thereby, the halide ion constituting the onium halide group containing the nitrogen-containing cationic group can be converted to the anion (X⁻) other than the halide ion.

The onium-forming agent containing the nitrogen-containing cationic group used for the reaction of the base polymer with the onium-forming agent containing the nitrogen-containing cationic group is an onium-forming agent corresponding to the nitrogen-containing cationic group (A'⁺) in General Formula (2). For example, the repeating unit represented by General Formula (3-1) can be formed by using an imidazole compound corresponding to the imidazolium structure in General Formula (3-1) as the onium-forming agent.

The method of reacting the base polymer with the onium-forming agent is not particularly limited, and is preferably a method of mixing the base polymer with the onium-forming agent. Examples of the method of mixing the base polymer with the onium-forming agent include, but not particularly limited to, a method of adding and mixing the onium-forming agent to and with a solution containing the base polymer, a method of adding and mixing the base polymer to and with a solution containing the onium-forming agent, a method of separately preparing a solution of the onium-forming agent and a solution of the base polymer, and mixing these solutions, and the like.

Solvents suitably used for the reaction of the base polymer with the onium-forming agent are inert solvents, and may be nonpolar or polar. Examples of such nonpolar solvents include aromatic hydrocarbons such as benzene and toluene; chain saturated hydrocarbons such as n-pentane and n-hexane; alicyclic saturated hydrocarbons such as cyclopentane and cyclohexane; and the like. Examples of such polar solvents include ethers such as tetrahydrofuran, anisole, and diethyl ether; esters such as ethyl acetate and ethyl benzoate; ketones such as acetone, 2-butanone, and acetophenone; aprotic polar solvents such as acetonitrile, dimethylformamide, dimethylacetamide, and dimethyl sulfoxide; protic polar solvents such as ethanol, methanol, and water; and the like. As the solvent, mixed solvents of these are suitably used. The amount of the solvent to be used is not particularly limited, and the solvent is used such that the concentration of the base polymer is preferably 1 to 50% by mass, more preferably 3 to 40% by mass.

The amount of the onium-forming agent to be used for the reaction of the base polymer with the onium-forming agent is not particularly limited, and can be determined according to the content of the repeating units represented by General Formula (2) of the intended polyether compound. Specifically, the amount of the onium-forming agent to be used is in the range of usually 0.01 to 100 moles, preferably 0.02 to 50 moles, more preferably 0.03 to 10 moles, still more preferably 0.05 to 2 moles relative to 1 mole of epichlorohydrin units in the base polymer.

The pressure for the reaction of the base polymer with the onium-forming agent is not particularly limited, and is usually 1 to 500 atm, preferably 1 to 100 atm, particularly preferably 1 to 50 atm. The temperature for the reaction is also not particularly limited, and is usually 0 to 200°C, preferably 20 to 170°C, more preferably 40 to 150°C. The reaction time is usually 1 minute to 1,000 hours, preferably 3 minutes to 800 hours, more preferably 5 minutes to 500 hours, still more preferably 30 minutes to 200 hours.

A method of reacting the onium halide structural unit-containing polyether compound with the salt of the anion (X⁻) other than the halide ion and a metal cation to perform an anion-exchange reaction is not particularly limited. Preferred is a method of mixing the onium halide structural unit-containing polyether compound with the salt of the anion (X⁻) other than the halide ion and a metal cation, and reacting these.

For the anion-exchange reaction, the reaction condition is not particularly limited. The onium halide structural unit-containing polyether compound and only the salt of the anion (X⁻) other than the halide ion and a metal cation may be mixed, or the anion-exchange reaction may be performed under a condition where a different compound such as an organic solvent is present. The amount of the salt to be used is not particularly limited, and is in the range of usually 0.01 to 100 moles, preferably 0.02 to 50 moles, more preferably 0.03 to 10 moles relative to 1 mole of the onium halide structural unit of the onium halide structural unit-containing polyether compound to be used.

The salt of the anion (X⁻) other than the halide ion and a metal cation used to perform the anion-exchange reaction is not particularly limited, and examples thereof include lithium (bisfluorosulfone)imide (Li(FSO₂)₂N), lithium (bistrifluoromethylsulfone)imide (Li(CF₃SO₂)₂N), lithium (bispentafluoroethylsulfone) imide (Li(CF₃CF₂SO₂)₂N), sodium acetate (CH₃COONa), silver acetate (CH₃COOAg), lithium butyrate (C₃H₇COOLi), lithium trifluoroacetate (CF₃COOLi), lithium benzoate (PhCOOLi), potassium tetracyanoborate (KB(CN)₄), lithium thiocyanate (LiSCN), lithium (biscyano)imide (Li(NC)₂N), lithium methylsulfonate (LiCH₃SO₃), lithium trifluoromethyl sulfonate (LiCF₃SO₃), potassium hydroxide (KOH), lithium perchlorate (LiClO₄), and the like. In the case of salts of a polyvalent anion and a metal cation, examples thereof include silver sulfate (Ag₂SO₄²⁻) and sodium carbonate (Na₂CO₃²⁻). Examples of salts of a polyanion having two or more monovalent anionic groups in the molecule and a metal cation include LiO₃SCF₂CF₂CF₂SO₃Li, LiO₃SCF₂CF₂SO₃Li, and Li₂(CF₃SO₂NSO₂CF₂CF₂OCF₂CF₂OCF₂CF₂SO₂NSO₂CF₃).

The pressure when the anion-exchange reaction is performed is usually 1 to 500 atm, preferably 1 to 100 atm, particularly preferably 1 to 50 atm. The temperature during the reaction is usually -30 to 200°C, preferably -15 to 180°C, more preferably 0 to 150°C. The reaction time is usually 1 minute to 1000 hours, preferably 3 minutes to 100 hours, more preferably 5 minutes to 10 hours, still more preferably 5 minutes to 3 hours.

After the completion of the anion-exchange reaction, the metal cation, the halide ion, the salts thereof, and the like can be removed with washing with water or the like or membrane separation by a membrane such as a semipermeable membrane to collect a mixture containing the polyether compound. Alternatively, the polyether compound can be extracted using a solvent such as methanol to collect a mixture containing the polyether compound. Further, the intended polyether compound can be collected in accordance with an ordinary method such as drying in vacuo, for example.

In addition to the polyether compound described above, the carbon dioxide absorber according to the present invention may contain an ion liquid; an alkali metal salt such as LiPF₆, LiTFSI, or KI; an oxygen-containing polar organic solvent; a filler such as a carbon material or an inorganic material; and the like.

Examples of oxygen-containing polar organic solvents include ethers such as tetrahydrofuran, anisole, diethyl ether, dibutyl ether, ethylene glycol dimethyl ether, diethylene glycol dimethyl ether, and tetraethylene glycol dimethyl ether; esters such as ethyl acetate and ethyl benzoate; ketones such as acetone, methyl ethyl ketone, diethyl ketone, ethylene carbonate, dimethyl carbonate, and acetophenone; alcohols such as ethanol, methanol, ethylene glycol, diethylene glycol, tetraethylene glycol, polyethylene glycol, and glycerol; dimethylformamide, dimethylacetamide, dimethyl sulfoxide, and the like. Among these, preferred are ethers, ketones, and alcohols, and more preferred are methyl ethyl ketone, tetraethylene glycol dimethyl ether, and tetraethylene glycol. These may be blended alone or in combination. For example, one or more of the ethers and one or more of the ketones may be used in combination.

When the carbon dioxide absorber according to the present invention comprises the oxygen-containing polar organic solvent, the content of the oxygen-containing polar organic solvent is not particularly limited, and is preferably 1 to 4000 parts by mass, more preferably 5 to 3000 parts by mass, more preferably 10 to 2000 parts by mass relative to 100 parts by mass of the polyether compound in the carbon dioxide absorber according to the present invention.

The ion liquid can be any organic salt compound having a melting point of 500°C or less, and is not particularly limited. The ion liquid is preferably an organic salt compound having a melting point of preferably 400°C or less, more preferably an organic salt compound having a melting point of 300°C or less, still more preferably an organic salt compound having a melting point of 150°C or less, still more preferably an organic salt compound having a melting point of 100°C or less, particularly preferably an organic salt compound having a melting point of 80°C or less, most preferably an organic salt compound having a melting point equal to or less than room temperature (25°C) . Although the ion liquid may be liquid at room temperature or may be solid at room temperature, the ion liquid is preferably liquid at room temperature. The ion liquid is preferably an organic salt compound formed of a cation and an anion, more preferably an organic salt compound containing an organic molecule having only one positive electric charge as a cation and a counter anion having only one negative electric charge. The ion liquid may be referred to as ionic liquid or ambient temperature molten salt in some cases.

The ion liquid used in the present invention is an ion liquid having molecular weight (molecular weight of cations and anions combined) in the range of preferably 100 to 700, more preferably 120 to 500. The ion liquid which is liquid at room temperature (25°C) is an ion liquid having a viscosity at 25°C in the range of preferably 10 to 1000 mPa·s, more preferably 10 to 500 mPa·s.

Specific examples of a cation forming the ion liquid include, but are not limited to, an ammonium ion; mono-substituted ammonium ions containing a cationic nitrogen atom, such as a methylammonium ion, a butylammonium ion, a cyclohexylammonium ion, an anilinium ion, a benzylammonium ion, and an ethanol ammonium ion; di-substituted ammonium ions containing a cationic nitrogen atom, such as a dimethylammonium ion, a diethylammonium ion, a dibutylammonium ion, and a nonylphenylammonium ion; tri-substituted ammonium ions containing a cationic nitrogen atom, such as a trimethylammonium ion, a triethylammonium ion, an n-butyldimethylammonium ion, a stearyldimethylammonium ion, a tributylammonium ion, a trivinylammonium ion, a triethanolammonium ion, an N,N-dimethylethanolammonium ion, a tri(2-ethoxyethyl)ammonium ion, and an N,N-diethyl-N-methyl-N-(2-methoxyethyl)ammonium ion; tetra-substituted ammonium ions containing a cationic nitrogen atom, such as a tetramethylammonium ion, a trimethyl ethyl ammonium ion, a trimethylpropylammonium ion, a trimethylbutylammonium ion, a trimethylpentylammonium ion, a trimethylhexylammonium ion, a trimethylheptylammonium ion, a trimethyloctylammonium ion, a trimethyldecylammonium ion, and a trimethyldodecylammonium ion; cationic heterocyclic ions containing a nitrogen atom, such as a piperidinium ion, a 1-methylpyrolidinium ion, a 1-ethyl-1-methylpyrolidinium ion, a 1-butyl-1-methylpyrolidinium ion, an imidazolium ion, a 1-methylimidazolium ion, a 1-ethylimidazolium ion, a 1-ethyl-3-methylimidazolium ion, a 1-butyl-3-methylimidazolium ion, a benzimidazolium ion, a pyrrolium ion, a 1-methylpyrrolium ion, an oxazolium ion, a benzoxazolium ion, a pyrazolium ion, an isoxazolium ion, a pyridinium ion, a 2,6-dimethylpyridinium ion, an N-butylpyridinium ion, a pyrazinium ion, a pyrimidinium ion, a pyridazinium ion, a triazinium ion, an N,N-dimethylanilinium ion, a quinolinium ion, an isoquinolinium ion, an indolinium ion, a quinoxalium ion, and an isoquinoxalium ion; cationic ions containing a phosphorus atom, such as a tributyldodecaphosphonium ion and a tetrabutylphosphonium ion; cationic ions containing a sulfur atom, such as a triphenylsulfonium ion and a tributylsulfonium ion; and the like. Among these, preferred are ions containing a cationic nitrogen atom, more preferred are tri-substituted ammonium ions and heterocyclic ions containing a cationic nitrogen atom, and particularly preferred are tri-substituted ammonium ions, ions containing a pyrolidinium ring, ions containing an imidazolium ring, and ions containing a pyridinium ring.

Specific examples of such an anion forming the ion liquid include those listed as specific examples of the anion represented by X⁻in General Formula (2), and suitable examples are as described above. The anion forming the ion liquid is preferably the same as the anion represented by X⁻ contained in the polyether compound.

The ion liquid used in the present invention may consist of cations of the same ion species and anions of the same ion species, or either of or both of cations and anions may include two or more ion species mixed. That is, the ion liquid may be a single ion liquid, or may be a mixture of two or more ion liquids.

Specific examples of the ion liquid used in the present invention include N,N-diethyl-N-methyl-N-(2-methoxyethyl)ammonium bis(trifluoromethanesulfonyl)imide, 1-ethyl-1-methylpyrolidinium tetrafluoroborate, 1-ethyl-3-methylimidazolium bis(trifluoromethanesulfonyl)imide, 1-butyl-3-methylimidazolium bis(trifluoromethanesulfonyl)imide, 1-ethyl-3-methylimidazolium hexafluorophosphate, 1-butyl-1-methylpyrolidinium bis(trifluoromethanesulfonyl)imide, N-butylpyridinium bis(trifluoromethanesulfonyl)imide, tributyldodecaphosphonium bis(trifluoromethanesulfonyl)imide, and the like. Among these, preferred is 1-butyl-3-methylimidazolium bis (trifluoromethanesulfonyl) imide.

When the carbon dioxide absorber according to the present invention comprises the ion liquid, the content of the ion liquid is not particularly limited, and is preferably 1 to 4000 parts by mass, preferably 5 to 3000 parts by mass, more preferably 10 to 2000 parts by mass relative to 100 parts by mass of the polyether compound in the carbon dioxide absorber according to the present invention.

Use of the carbon dioxide absorber according to the present invention can provide a carbon dioxide absorption member containing the carbon dioxide absorber according to the present invention.

The carbon dioxide absorber according to the present invention has high carbon dioxide absorbency. Accordingly, use of the carbon dioxide absorber according to the present invention can provide a carbon dioxide absorption member having high carbon dioxide absorbency. In addition, the carbon dioxide absorber according to the present invention is less likely to drop off from a porous membrane when it is held by the porous membrane. Accordingly, the carbon dioxide absorption member formed of the carbon dioxide absorber according to the present invention held by a porous membrane is excellent in carbon dioxide absorption properties, properties for reducing drop off of the carbon dioxide absorber, and thus durability.

The carbon dioxide absorption member containing the carbon dioxide absorber according to the present invention can be a carbon dioxide absorption member formed, for example, by casting the carbon dioxide absorber according to the present invention onto a substrate such as a sheet or by impregnating a porous body such as a non-woven fabric or a porous membrane with the carbon dioxide absorber according to the present invention.

The method of molding the carbon dioxide absorption member is not particularly limited, and examples thereof include a method of obtaining a film-shaped molded body by casting the carbon dioxide absorber according to the present invention as it is or in the form of a liquid composition thereof dissolved or dispersed in a solvent, onto a substrate; a method of obtaining a molded body by impregnating a porous body such as a non-woven fabric or a porous membrane with the carbon dioxide absorber according to the present invention as it is or in the form of a liquid composition thereof dissolved or dispersed in a solvent; and the like.

The carbon dioxide absorber may be fed to molding after additives such as a reinforcing agent; an antioxidant; an ultraviolet absorbing agent; a light-resistant stabilizer; a tackifier; a surfactant; an electric conductivity imparting agent; an electrolyte substance; a colorant (dye, pigment); a flame retardant; and an antistatic agent are added thereto.

When the polyether compound contained in the carbon dioxide absorber according to the present invention has a cross-linkable group, the carbon dioxide absorption member can be obtained by adding a cross-linking agent to the carbon dioxide absorber to prepare a cross-linkable composition, and then molding and cross-linking the cross-linkable composition.

Since the carbon dioxide absorber according to the present invention has high carbon dioxide absorbency, the carbon dioxide absorber according to the present invention can be suitably used as a member for separating carbon dioxide, a member for storing carbon dioxide, and a member for transporting carbon dioxide. The carbon dioxide absorber according to the present invention demonstrates high carbon dioxide absorbency under normal pressure and under high pressure (e.g., 2000 hPa to 150000 hPa). For this reason, the carbon dioxide absorber according to the present invention can be suitably used as a member for equipment for separating carbon dioxide under normal pressure or as a member of equipment for separating carbon dioxide under high pressure.

For example, the carbon dioxide absorber according to the present invention can be suitably used in applications such as absorption of carbon dioxide from natural gas, absorption of carbon dioxide from biogas, absorption of carbon dioxide from CO₂/CH₄-containing gas, and absorption of carbon dioxide from CO₂/N₂-containing gas. A gas subjected to carbon dioxide absorption may include hydrogen sulfide, mercaptan (thiol), disulfide, carbon disulfide, and the like.

### EXAMPLES

Hereinafter, the present invention will be described based on more detailed examples, but the present invention is not limited to these examples. Hereinafter, "parts" and "%" are mass-based unless otherwise specified. Tests and evaluations conformed to the following.

### [Number average molecular weight (Mn) and molecular weight distribution (Mw/Mn)]

(1) The number average molecular weight (Mn) and molecular weight distribution (Mw/Mn) of the base polymer were measured in terms of polystyrene by gel permeation chromatography (GPC) using tetrahydrofuran as a solvent. The measuring instrument used was HLC-8320 (available from Tosoh Corporation), the columns used were four TSKgel Super Multipore HZH (available from Tosoh Corporation) columns connected in series, and the detector used was a differential refractometer RI-8320 (available from Tosoh Corporation).
(2) The number average molecular weight (Mn) of the polyether compound was determined as follows. Specifically, first, the average molecular weight of all the repeating units constituting the polyether compound was determined from the average molecular weight of the repeating units of the base polymer, the average molecular weights of various monomer units constituting the polyether compound, and the contents of the various monomer units determined from (3) below. Then, the value obtained by multiplying the number of repeating units of the base polymer by the average molecular weight of all the repeating units constituting the polyether compound was defined as the number average molecular weight (Mn) of the polyether compound.
(3) The structure of the base polymer, that of the polyether compound, and the contents of the various monomer units in the base polymer and the polyether compound were measured as follows using a nuclear magnetic resonator (NMR). Specifically, first, 30 mg of a sample of the base polymer or the polyether compound was added to 1.0 mL of deuterated chloroform or deuterated dimethyl sulfoxide, and was homogeneously dissolved by shaking for 1 hour. Then, the resulting solution was subjected to NMR to obtain a ¹H-NMR spectrum, and the structure of the sample was determined in accordance with an ordinary method.

The content of the repeating units represented by General Formula (2) in the polyether compound containing the repeating units represented by General Formula (2) was calculated by the following method. Specifically, first, the number of moles B1 of all the oxirane monomer units was calculated from an integrated value of protons derived from the oxirane monomer units in the main chain. Next, the number of moles B2 of the repeating units represented by General Formula (2) was calculated from an integrated value of protons derived from the onium structure in the repeating units represented by General Formula (2). Then, the ratio of B2 to B1 (percentage) was determined as the content of the repeating units represented by General Formula (2) in the polyether compound.

### [Amount of carbon dioxide absorption]

A thin coating of 1000 mg of the carbon dioxide absorber (polyether compound or composition) was applied onto a glass substrate. Then, the carbon dioxide absorber with the glass substrate was dried with a vacuum dryer at 80°C for 24 hours to remove water and volatile components. Next, the carbon dioxide absorber with the glass substrate was allowed to stand under a carbon dioxide stream at 1000 hPa or 8000 hPa and a temperature of 25°C for 72 hours so that carbon dioxide was absorbed in the carbon dioxide absorber to saturation. The carbon dioxide absorber with the glass substrate in which carbon dioxide was absorbed to saturation was placed into an airtight container, and was introduced into a reaction tube of a temperature programmed desorption gas analyzer (Temperature Programmed Desorption-Mass Spectrometry: TPD-MS; Rigaku temperature programmed desorption gas analyzer TPD type V) filled with helium. After the carbon dioxide absorber was introduced into a heating furnace, the amount of carbon dioxide detected by the detector was quantitatively determined while the temperature was being elevated, and thus the amount of carbon dioxide absorption per 1 g of the carbon dioxide absorber was determined.

### [Test 1 for drop off of carbon dioxide absorber from porous membrane]

For the carbon dioxide absorbers (polyether compounds) obtained in Examples 1 to 19 and Comparative Examples 1 to 7, each carbon dioxide absorber was dissolved in dimethyl sulfoxide to prepare a 10 wt% carbon dioxide absorber solution. Next, a porous membrane substrate (made of polyethylene, thickness: 25 micrometers, porosity ratio: 40%, average pore diameter: 15 nanometers) was heated to 100°C, and the resulting carbon dioxide absorber solution was applied thereto to cause the carbon dioxide absorber solution to permeate into pores thereof. Next, dimethyl sulfoxide was slowly volatilized to remove the solvent. Thereafter, the membrane was immersed in water, and excess carbon dioxide absorber on the surface was scraped off. The resulting membrane was dried to obtain a support membrane formed of the carbon dioxide absorber and the porous substrate.

The resulting support membrane was fixed onto and brought into close contact with a perforated dish (diameter: 2 cm) having a large number of pores with a diameter of 1 mm. The support membrane formed of the carbon dioxide absorber and the porous substrate was sucked by reducing the pressure on the lower side of the perforated dish (the side opposite to the support membrane) in two stages, and whether the carbon dioxide absorber dropped off from the porous substrate or not was visually observed, and determination was performed according to the following criteria. The upper side of the perforated dish was set at 1.0 atmospheric pressure, that is, normal pressure.

The carbon dioxide absorber was determined as C if it somewhat dropped off from pores of the porous membrane when the pressure on the lower side of the perforated dish was set at 0.9 atmospheric pressure. The carbon dioxide absorber was determined as B if it did not drop off from pores of the porous membrane when the pressure on the lower side of the perforated dish was set at 0.9 atmospheric pressure but somewhat dropped off therefrom when the pressure on the lower side of the perforated dish was set at 0.8 atmospheric pressure. Further, the carbon dioxide absorber was determined as A if it did not drop off and was held in pores of the porous membrane even when the pressure on the lower side of the perforated dish was set at 0.8 atmospheric pressure

### [Test 2 for drop off of carbon dioxide absorber from porous membrane]

For the carbon dioxide absorbers (compositions) obtained in Examples 20 to 30 and Comparative Examples 8 to 11, each carbon dioxide absorber was applied onto a porous substrate (made of polyethylene, thickness: 25 micrometers, porosity ratio: 40%, average pore diameter: 15 nanometers) heated to 100°C, and was caused to permeate into pores thereof. Next, the surface of the membrane was wiped to remove excess carbon dioxide absorber, thereby obtaining a support membrane formed of the carbon dioxide absorber and the porous substrate.

The resulting support membrane was hung vertically and fixed, and was allowed to stand under a normal pressure environment at a temperature of 25°C and a humidity of 60% for 24 hours. Whether the carbon dioxide absorber dropped off from the porous substrate or not was visually observed, and determination was performed according to the following criteria. The carbon dioxide absorber was determined as O if it was held by the pores of the porous membrane, and was determined as × if it somewhat dropped off.

### [Production Example A]

### (Living anionic polymerization of epichlorohydrin)

To a glass reactor equipped with a stirrer and purged with argon, 3.22 g of tetra-normal butylammonium bromide and 50 ml of toluene were added, and this was cooled to 0°C. In the next step, 1.256 g (1.1 equivalents relative to tetra-normal butylammonium bromide) of triethylaluminum dissolved in 10 ml of normal hexane was added, and the mixture was allowed to react for 15 minutes to obtain a catalyst composition. To the resulting catalyst composition, 10.0 g of epichlorohydrin was added, followed by polymerization reaction at 0°C. After the polymerization reaction was started, the viscosity of the solution gradually increased. After 12 hours of the reaction, a small amount of water was poured to the polymerization reaction solution to stop the reaction. The resulting polymerization reaction solution was washed with a 0.1 N hydrochloric acid aqueous solution to subject the catalyst residue to a deashing treatment. The residue was further washed with deionized water. Thereafter, the organic phase was dried in vacuo at 50°C for 12 hours. Thereby, a colorless and transparent oily substance was obtained in a yield of 9.9 g. For the resulting substance, the number average molecular weight (Mn) was 1,050 according to GPC, the number of repeating units on average was 11 (11-mer), and the molecular weight distribution (Mw/Mn) was 1.35. From above, it can be said that the resulting oily substance is a polyepichlorohydrin (base polymer A) having a bromomethyl group at the polymerization initiating end and a hydroxyl group at the polymerization terminating end, which is constituted by epichlorohydrin units.

### [Production Example B]

### (Living anionic polymerization of epichlorohydrin)

To a glass reactor equipped with a stirrer and purged with argon, 1.61 g of tetra-normal butylammonium bromide and 50 ml of toluene were added, and this was cooled to 0°C. In the next step, 0.657 g (1.15 equivalents relative to tetra-normal butylammonium bromide) of triethylaluminum dissolved in 10 ml of normal hexane was added, and the mixture was allowed to react for 15 minutes to obtain a catalyst composition. To the resulting catalyst composition, 10.0 g of epichlorohydrin was added, and the mixture was subjected to polymerization reaction at 0°C. After the polymerization reaction was started, the viscosity of the solution gradually increased. After 12 hours of the reaction, a small amount of water was poured to the polymerization reaction solution to stop the reaction. The resulting polymerization reaction solution was washed with a 0.1 N hydrochloric acid aqueous solution to subject the catalyst residue to a deashing treatment. The residue was further washed with deionized water. Thereafter, the organic phase was dried in vacuo at 50°C for 12 hours. Thereby, a colorless and transparent oily substance was obtained in a yield of 9.9 g. For the resulting substance, the number average molecular weight (Mn) according to GPC was 2,100, the number of repeating units on average was 23 (23-mer), and the molecular weight distribution (Mw/Mn) was 1.25. From above, it can be said that the resulting oily substance is a polyether compound (base polymer B) having a bromomethyl group at the polymerization initiating end and a hydroxyl group at the polymerization terminating end, which is constituted by epichlorohydrin units.

### [Production Example C]

### (Living anionic polymerization of epichlorohydrin)

To a glass reactor equipped with a stirrer and purged with argon, 0.644 g of tetra-normal butylammonium bromide and 50 ml of toluene were added, and this was cooled to 0°C. In the next step, 0.285 g (1.25 equivalents relative to tetra-normal butylammonium bromide) of triethylaluminum dissolved in 10 ml of normal hexane was added, and the mixture was allowed to react for 15 minutes to obtain a catalyst composition. To the resulting catalyst composition, 10.0 g of epichlorohydrin was added, and the mixture was subjected to polymerization reaction at 0°C. After the polymerization reaction was started, the viscosity of the solution gradually increased. After 12 hours of the reaction, a small amount of water was poured to the polymerization reaction solution to stop the reaction. The resulting polymerization reaction solution was washed with a 0.1 N hydrochloric acid aqueous solution to subject the catalyst residue to a deashing treatment. The residue was further washed with deionized water. Thereafter, the organic phase was dried in vacuo at 50°C for 12 hours. Thereby, a colorless and transparent oily substance was obtained in a yield of 9.9 g. For the resulting substance, the number average molecular weight (Mn) according to GPC was 5,390, the number of repeating units on average was 58 (58-mer), and the molecular weight distribution (Mw/Mn) was 1.21. From above, it can be said that the resulting oily substance is a polyether compound (base polymer C) having a bromomethyl group at the polymerization initiating end and a hydroxyl group at the polymerization terminating end, which is constituted by epichlorohydrin units.

### [Production Example D]

### (Living anionic polymerization of epichlorohydrin)

To a glass reactor equipped with a stirrer and purged with argon, 0.322 g of tetra-normal butylammonium bromide and 50 ml of toluene were added, and this was cooled to 0°C. In the next step, 0.148 g (1.3 equivalents relative to tetra-normal butylammonium bromide) of triethylaluminum dissolved in 10 ml of normal hexane was added, and the mixture was allowed to react for 15 minutes to obtain a catalyst composition. To the resulting catalyst composition, 10.0 g of epichlorohydrin was added, and the mixture was subjected to polymerization reaction at 0°C. After the polymerization reaction was started, the viscosity of the solution gradually increased. After 12 hours of the reaction, a small amount of water was poured to the polymerization reaction solution to stop the reaction. The resulting polymerization reaction solution was washed with a 0.1 N hydrochloric acid aqueous solution to subject the catalyst residue to a deashing treatment. The residue was further washed with deionized water. Thereafter, the organic phase was dried in vacuo at 50°C for 12 hours. Thereby, a colorless and transparent viscous oily substance was obtained in a yield of 9.9 g. For the resulting substance, the number average molecular weight (Mn) according to GPC was 10,700, the number of repeating units on average was 116 (116-mer), and the molecular weight distribution (Mw/Mn) was 1.18. From above, it can be said that the resulting oily substance is a polyether compound (base polymer D) having a bromomethyl group at the polymerization initiating end and a hydroxyl group having a polymerization terminating end, which is constituted by epichlorohydrin units.

### [Production Example E]

### (Living anionic polymerization of epichlorohydrin)

To a glass reactor equipped with a stirrer and purged with argon, 0.215 g of tetra-normal butylammonium bromide and 50 ml of toluene was added, and this was cooled to 0°C. In the next step, 0.114 g (1.5 equivalents relative to tetra-normal butylammonium bromide) of triethylaluminum dissolved in 10 ml of normal hexane was added, and the mixture was allowed to react for 15 minutes to obtain a catalyst composition. To the resulting catalyst composition, 10.0 g of epichlorohydrin was added, and the mixture was subjected to polymerization reaction at 0°C. After the polymerization reaction was started, the viscosity of the solution gradually increased. After 12 hours of the reaction, a small amount of water was poured to the polymerization reaction solution to stop the reaction. The resulting polymerization reaction solution was washed with a 0.1 N hydrochloric acid aqueous solution to subject the catalyst residue to a deashing treatment. The residue was further washed with deionized water. Thereafter, the organic phase was dried in vacuo at 50°C for 12 hours. Thereby, a colorless and transparent viscous oily substance was obtained in a yield of 9.7 g. For the resulting substance, the number average molecular weight (Mn) according to GPC was 15,600, the number of repeating units on average was 169 (169-mer), and the molecular weight distribution (Mw/Mn) was 1.35. From above, it can be said that the resulting oily substance is a polyether compound (base polymer E) having a bromomethyl group at the polymerization initiating end and a hydroxyl group at the polymerization terminating end, which is constituted by epichlorohydrin units.

### [Production Example F]

### (Living anionic polymerization of epichlorohydrin)

To a glass reactor equipped with a stirrer and purged with argon, 0.107 g of tetra-normal butylammonium bromide and 50 ml of toluene were added, and this was cooled to 0°C. In the next step, 0.057 g (1.5 equivalents relative to tetra-normal butylammonium bromide) of triethylaluminum dissolved in 10 ml of normal hexane was added, and the mixture was allowed to react for 15 minutes to obtain a catalyst composition. To the resulting catalyst composition, 10.0 g of epichlorohydrin was added, and the mixture was subjected to polymerization reaction at 0°C. After the polymerization reaction was started, the viscosity of the solution gradually increased. After 12 hours of the reaction, a small amount of water was poured to the polymerization reaction solution to stop the reaction. The resulting polymerization reaction solution was washed with a 0.1 N hydrochloric acid aqueous solution to subject the catalyst residue to a deashing treatment. The residue was further washed with deionized water. Thereafter, the organic phase was dried in vacuo at 50°C for 12 hours. Thereby, a colorless and transparent viscous oily substance was obtained in a yield of 9.5 g. For the resulting substance, the number average molecular weight (Mn) according to GPC was 32,500, the number of repeating units on average was 351 (351-mer), and the molecular weight distribution (Mw/Mn) was 1.43. From above, it can be said that the resulting oily substance is a polyether compound (base polymer F) having a bromomethyl group at the polymerization initiating end and a hydroxyl group at the polymerization terminating end, which is constituted by epichlorohydrin units.

### [Production Example G]

### (Living anion copolymerization of epichlorohydrin and glycidyl methacrylate)

To a glass reactor equipped with a stirrer and purged with argon, 0.322 g of tetra-normal butylammonium bromide and 50 ml of toluene were added, and this was cooled to 0°C. In the next step, 0.148 g (1.3 equivalents relative to tetra-normal butylammonium bromide) of triethylaluminum dissolved in 10 ml of normal hexane was added, and the mixture was allowed to react for 15 minutes to obtain a catalyst composition. To the resulting catalyst composition, 9.5 g of epichlorohydrin and 0.5 g of glycidyl methacrylate were added, and the mixture was subjected to polymerization reaction at 0°C. After 12 hours of the reaction, a small amount of water was poured to the polymerization reaction solution to stop the reaction. The resulting polymerization reaction solution was washed with a 0.1 N hydrochloric acid aqueous solution to subject the catalyst residue to a deashing treatment. The residue was further washed with deionized water. Thereafter, the organic phase was dried in vacuo at 50°C for 12 hours. Thereby, a colorless and transparent viscous oily substance was obtained in a yield of 9.9 g. For the resulting viscous oily substance, the number average molecular weight (Mn) according to GPC was 11,000, the number of repeating units on average was 105 (105-mer), and the molecular weight distribution was 1.26. Further, the resulting viscous oily substance was measured by ¹H-NMR, from which it was confirmed that this rubbery substance contained 97.0 mol% of epichlorohydrin units and 3.0 mol% of glycidyl methacrylate units. From above, it can be said that the resulting viscous oily substance is a polyether compound (base polymer G) having a bromomethyl group at the polymerization initiating end and a hydroxyl group at the polymerization terminating end, which is constituted by epichlorohydrin units and glycidyl methacrylate units.

### [Production Example H]

### (Living anion copolymerization of epichlorohydrin and glycidyl methacrylate)

To a glass reactor equipped with a stirrer and purged with argon, 0.032 g of tetra-normal butylammonium bromide and 5 ml of toluene were added, and this was cooled to 0°C. In the next step, 0.029 g (2.5 equivalents relative to tetra-normal butylammonium bromide) of triethylaluminum dissolved in 0.25 ml of normal hexane was added, and the mixture was allowed to react for 15 minutes to obtain a catalyst composition. To the resulting catalyst composition, 9.5 g of epichlorohydrin and 0.5 g of glycidyl methacrylate were added, and the mixture was subjected to polymerization reaction at 0°C. After 12 hours of the reaction, a small amount of water was poured to the polymerization reaction solution to stop the reaction. The resulting polymerization reaction solution was washed with a 0.1 N hydrochloric acid aqueous solution to subject the catalyst residue to a deashing treatment. The residue was further washed with deionized water. Thereafter, the organic phase was dried in vacuo at 50°C for 12 hours. Thereby, a colorless and transparent viscous oily substance was obtained in a yield of 8.3 g. For the resulting viscous oily substance, the number average molecular weight (Mn) according to GPC was 57,000, the number of repeating units on average was 606 (606-mer), and the molecular weight distribution was 1.58. Further, the resulting rubbery substance was measured by ¹H-NMR, from which it was confirmed that the viscous oily substance contained 97.0 mol% of epichlorohydrin units and 3.0 mol% of glycidyl methacrylate units. From above, it can be said that the resulting viscous oily substance is a polyether compound (base polymer H) having a bromomethyl group at the polymerization initiating end and a hydroxyl group at the polymerization terminating end, which is constituted by epichlorohydrin units and glycidyl methacrylate units.

### [Production Example I]

### (Production of epichlorohydrin/propylene oxide random copolymer)

To a glass reactor equipped with a stirrer, 0.160 g of tetra-normal butylammonium bromide and 60 ml of toluene were added, and this was cooled to 0°C. Further, 0.0540 g of trimethylaluminum dissolved in 1 ml of normal hexane was added, followed by a reaction for 15 minutes. 3.0 g of epichlorohydrin and 7.0 g of propylene oxide were added to the mixture thus obtained, and the mixture was subjected to a polymerization reaction at 0°C. After the polymerization reaction was started, the viscosity of the solution gradually increased. After 1 hour of the reaction, a small amount of water was poured to the polymerization reaction solution to stop the reaction. The resulting polymerization reaction solution was washed with a 0.1 N hydrochloric acid aqueous solution to subject the catalyst residue to a deashing treatment. The residue was further washed with deionized water. Thereafter, the organic phase was dried in vacuo at 50°C for 12 hours. Thereby, a colorless and transparent viscous oily substance was obtained in a yield. The polymer was obtained in a yield of 5.6 g. For the resulting polymer, the number average molecular weight (Mn) was 10,600, the weight average molecular weight (Mw) was 12,200, the number of repeating units on average was 171 (171-mer), and the molecular weight distribution (Mw/Mn) was 1.15. The compositional ratio (molar ratio) of monomer units in the polymer determined by ¹H-NMR, i.e., epichlorohydrin units:propylene oxide units was 11:89. From above, it can be said that the resulting viscous oily substance is a polyether compound (base polymer I) having a bromomethyl group at the polymerization initiating end and a hydroxyl group at the polymerization terminating end, which is constituted by epichlorohydrin units and propylene oxide units.

### [Production Example J]

### (Production of epichlorohydrin/ethylene oxide random copolymer)

To a glass reactor equipped with a stirrer, 0.160 g of tetra-normal butylammonium bromide and 60 ml of toluene were added, and this was cooled to 0°C. Further, 0.0540 g of trimethylaluminum dissolved in 1 ml of normal hexane was added, followed by a reaction for 15 minutes. 5.0 g of epichlorohydrin and 5.0 g of ethylene oxide were added to the mixture thus obtained, and the mixture was subjected to a polymerization reaction at 0°C. After the polymerization reaction was started, the viscosity of the solution gradually increased. After 1 hour of the reaction, a small amount of water was poured to the polymerization reaction solution to stop the reaction. The resulting polymerization reaction solution was washed with a 0.1 N hydrochloric acid aqueous solution to subject the catalyst residue to a deashing treatment. The residue was further washed with deionized water. The organic phase was dried in vacuo at 50°C for 12 hours. Thereby, a colorless and transparent viscous oily substance was obtained in a yield. The polymer was obtained in a yield of 6.5 g. For the resulting polymer, the number average molecular weight (Mn) was 15,100, the weight average molecular weight (Mw) was 22,300, the number of repeating units on average was 303 (303-mer), and the molecular weight distribution (Mw/Mn) was 1.48. The compositional ratio (molar ratio) of monomer units in the polymer determined by ¹H-NMR, i.e., epichlorohydrin units:propylene oxide units was 12:88. From above, it can be said that the resulting viscous oily substance is a polyether compound (base polymer J) having a bromomethyl group at the polymerization initiating end and a hydroxyl group at the polymerization terminating end, which is constituted by epichlorohydrin units and ethylene oxide units.

### [Production Example 1']

### (Quaternization of epichlorohydrin units in base polymer A with 1-methylimidazole)

To a glass reactor equipped with a stirrer and purged with argon, 8.0 g of the base polymer A obtained in Production Example A, 22.0 g of 1-methylimidazole, and 16.0 g of N,N-dimethylformamide were added, and were heated to 80°C. These materials were reacted at 80°C for 144 hours, and thereafter, were cooled to room temperature to stop the reaction. Part of the resulting reaction solution was extracted, and was dried in vacuo at 50°C for 120 hours, giving 15.0 g of a red brown resin-like substance. From ¹H-NMR measurement and elemental analysis performed on the resin-like substance, this was identified as a polyether compound A' having a 1-methylimidazolium halide group, in which all the chloro groups in the epichlorohydrin units in the base polymer A, as a starting raw material, which was obtained in Production Example A, were each substituted by a 1-methylimidazolium chloride group and all the bromo groups in the bromomethyl groups at the polymerization initiating ends were each substituted by a 1-methylimidazolium bromide group. For the resulting polyether compound A', the number average molecular weight (Mn) was 1,980, and the number of repeating units on average was 11 (11-mer).

### [Production Example 1'']

### (Anion exchange of polyether compound A' having 1-methylimidazolium halide group with lithium bis(trifluoromethanesulfonyl)imide)

To a glass reactor equipped with a stirrer, 10.0 g of lithium bis(trifluoromethanesulfonyl)imide dissolved in 300 ml of distilled water was added. Separately, 5.0 g of the polyether compound A' having a 1-methylimidazolium halide group obtained in Production Example 1' was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 11.5 g of a light brown viscous oily substance. From ¹H-NMR measurement and elemental analysis performed on the resulting light brown viscous oily substance, this was identified as an imidazolium structure-containing polyether compound A" having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound A' having a 1-methylimidazolium halide group, as a starting raw material, which was obtained in Production Example 1'. For the resulting polyether compound A'', the number average molecular weight (Mn) was 4,750, and the number of repeating units on average was 11 (11-mer) .

### [Production Example 2']

### (Quaternization of epichlorohydrin units in base polymer B with 1-methylimidazole)

To a glass reactor equipped with a stirrer and purged with argon, 8.0 g of the base polymer B obtained in Production Example B, 22.0 g of 1-methylimidazole, and 16.0 g of N,N-dimethylformamide were added, and were heated to 80°C. These materials were reacted at 80°C for 144 hours, and thereafter, were cooled to room temperature to stop the reaction. Part of the resulting reaction solution was extracted, and was dried in vacuo at 50°C for 120 hours, giving 15.0 g of a red brown resin-like substance. From ¹H-NMR measurement and elemental analysis performed on the resin-like substance, this was identified as a polyether compound B' having a 1-methylimidazolium halide group, in which all the chloro groups in the epichlorohydrin units in the base polymer B, as a starting raw material, which was obtained in Production Example B, were each substituted by a 1-methylimidazolium chloride group, and all the bromo groups in the bromomethyl groups at the polymerization initiating ends were each substituted by 1-methylimidazolium bromide group. For the resulting polyether compound B', the number average molecular weight (Mn) was 3,960, and the number of repeating units on average was 23 (23-mer).

### [Production Example 2'']

### (Anion exchange of polyether compound B' having 1-methylimidazolium halide group with lithium bis(trifluoromethanesulfonyl)imide)

300 ml of distilled water containing 10.0 g of lithium bis(trifluoromethanesulfonyl)imide dissolved therein was added to a glass reactor equipped with a stirrer. Separately, 5.0 g of the polyether compound B' having a 1-methylimidazolium halide group obtained in Production Example 2' was dissolved in 50 ml of distilled water, and the solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 11.4 g of a light brown viscous oily substance. From ¹H-NMR measurement and elemental analysis performed on the resulting light brown viscous oily substance, this was identified as an imidazolium structure-containing polyether compound B" having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound B' having a 1-methylimidazolium halide group, as a starting raw material, which was obtained in Production Example 2'. For the resulting polyether compound B'', the number average molecular weight (Mn) was 9,500, and the number of repeating units on average was 23 (23-mer) .

### [Production Example 3']

### (Quaternization of epichlorohydrin units in base polymer C with 1-methylimidazole)

To a glass reactor equipped with a stirrer and purged with argon, 8.0 g of the base polymer C obtained in Production Example C, 22.0 g of 1-methylimidazole, and 16.0 g of N,N-dimethylformamide were added, and were heated to 80°C. These materials were reacted at 80°C for 144 hours, and thereafter, were cooled to room temperature to stop the reaction. Part of the resulting reaction solution was extracted, and was dried in vacuo at 50°C for 120 hours, giving 15.0 g of a red brown resin-like substance. From ¹H-NMR measurement and elemental analysis performed on the resin-like substance, this was identified as a polyether compound C' having a 1-methylimidazolium halide group, in which all the chloro groups in the epichlorohydrin units in the base polymer C, as a starting raw material, which was obtained in Production Example C, were each substituted by a 1-methylimidazolium chloride group and all the bromo groups in the bromomethyl groups at the polymerization initiating ends were each substituted by a 1-methylimidazolium bromide group. For the resulting polyether compound C', the number average molecular weight (Mn) was 10,200, and the number of repeating units on average was 58 (58-mer).

### [Production Example 3'']

### (Anion exchange of polyether compound C' having 1-methylimidazolium halide group with lithium bis(trifluoromethanesulfonyl)imide)

To a glass reactor equipped with a stirrer, 10.0 g of lithium bis(trifluoromethanesulfonyl)imide dissolved in 300 ml of distilled water was added. Separately, 5.0 g of the polyether compound C' having a 1-methylimidazolium halide group obtained in Production Example 3' was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 11.6 g of a light brown viscous oily substance. From ¹H-NMR measurement and elemental analysis performed on the resulting light brown viscous oily substance, this was identified as an imidazolium structure-containing polyether compound C'' having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound C' having a 1-methylimidazolium halide group, as a starting raw material, which was obtained in Production Example 3'. For the resulting polyether compound C'', the number average molecular weight (Mn) was 24,400, and the number of repeating units on average was 58 (58-mer) .

### [Production Example 4']

### (Quaternization of epichlorohydrin units in base polymer D with 1-methylimidazole)

To a glass reactor equipped with a stirrer and purged with argon, 8.0 g of the base polymer D obtained in Production Example D, 22.0 g of 1-methylimidazole, and 16.0 g of N,N-dimethylformamide were added, and were heated to 80°C. These materials were reacted at 80°C for 144 hours, and thereafter, were cooled to room temperature to stop the reaction. Part of the resulting reaction solution was extracted, and was dried in vacuo at 50°C for 120 hours, giving 14.9 g of a red brown resin-like substance. From ¹H-NMR measurement and elemental analysis performed on the resin-like substance, this was identified as a polyether compound D' having a 1-methylimidazolium halide group, in which all the chloro groups in the epichlorohydrin units in the base polymer D, as a starting raw material, which was obtained in Production Example D, were each substituted by a 1-methylimidazolium chloride group and all the bromo groups in the bromomethyl groups at the polymerization initiating ends were each substituted by a 1-methylimidazolium bromide group. For the resulting polyether compound D', the number average molecular weight (Mn) was 20,200, and the number of repeating units on average was 116 (116-mer).

### [Production Example 4'']

### (Anion exchange of polyether compound D' having 1-methylimidazolium halide group with lithium bis(trifluoromethanesulfonyl)imide)

To a glass reactor equipped with a stirrer, 10.0 g of lithium bis(trifluoromethanesulfonyl)imide dissolved in 300 ml of distilled water was added. Separately, 5.0 g of the polyether compound D' having a 1-methylimidazolium halide group obtained in Production Example 4' was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 11.5 g of a light brown viscous oily substance. From ¹H-NMR measurement and elemental analysis performed on the resulting light brown viscous oily substance, this was identified as an imidazolium structure-containing polyether compound D'' having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound D' having a 1-methylimidazolium halide group, as a starting raw material, which was obtained in Production Example 4'. For the resulting polyether compound D'', the number average molecular weight (Mn) was 48,500, and the number of repeating units on average was 116 (116-mer) .

### [Production Example 5']

### (Quaternization of epichlorohydrin units in base polymer E with 1-methylimidazole)

To a glass reactor equipped with a stirrer and purged with argon, 8.0 g of the base polymer E obtained in Production Example E, 22.0 g of 1-methylimidazole, and 16.0 g of N,N-dimethylformamide were added, and were heated to 80°C. These materials were reacted at 80°C for 144 hours, and thereafter, were cooled to room temperature to stop the reaction. Part of the resulting reaction solution was extracted, and was dried in vacuo at 50°C for 120 hours, giving 14.9 g of a red brown resin-like substance. From ¹H-NMR measurement and elemental analysis performed on the resin-like substance, this was identified as a polyether compound E' having a 1-methylimidazolium halide group, in which all the chloro groups in the epichlorohydrin units in the base polymer E, as a starting raw material, which was obtained in Production Example E, were each substituted by a 1-methylimidazolium chloride group and all the bromo groups in the bromomethyl groups at the polymerization initiating ends were each substituted by a 1-methylimidazolium bromide group. For the polyether compound E', the number average molecular weight (Mn) was 29,400, and the number of repeating units on average was 169 (169-mer).

### [Production Example 5'']

### (Anion exchange of polyether compound E' having 1-methylimidazolium halide group with lithium bis(trifluoromethanesulfonyl)imide)

To a glass reactor equipped with a stirrer, 10.0 g of lithium bis(trifluoromethanesulfonyl)imide dissolved in 300 ml of distilled water was added. Separately, 5.0 g of the polyether compound E' having a 1-methylimidazolium halide group obtained in Production Example 5' was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 11.4 g of a light brown viscous oily substance. From ¹H-NMR measurement and elemental analysis performed on the resulting light brown viscous oily substance, this was identified as an imidazolium structure-containing polyether compound E'' having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound E' having a 1-methylimidazolium halide group, as a starting raw material, which was obtained in Production Example 5'. For the resulting polyether compound E'', the number average molecular weight (Mn) was 70,700, and the number of repeating units on average was 169 (169-mer) .

### [Production Example 6']

### (Quaternization of epichlorohydrin units in base polymer F with 1-methylimidazole)

To a glass reactor equipped with a stirrer and purged with argon, 8.0 g of the base polymer F obtained in Production Example F, 22.0 g of 1-methylimidazole, and 16.0 g of N,N-dimethylformamide were added, and were heated to 80°C. These materials were reacted at 80°C for 144 hours, and thereafter, were cooled to room temperature to stop the reaction. Part of the resulting reaction solution was extracted, and was dried in vacuo at 50°C for 120 hours, giving 14.9 g of a red brown resin-like substance. From ¹H-NMR measurement and elemental analysis performed on the resin-like substance, this was identified as a polyether compound F' having a 1-methylimidazolium halide group, in which all the chloro groups in the epichlorohydrin units in the base polymer F, as a starting raw material, which was obtained in Production Example F, were each substituted by a 1-methylimidazolium chloride group and all the bromo groups in the bromomethyl groups at the polymerization initiating ends were each substituted by a 1-methylimidazolium bromide group. For the resulting polyether compound F', the number average molecular weight (Mn) was 61,300, and the number of repeating units on average was 351 (351-mer).

### [Production Example 6'']

### (Anion exchange of polyether compound F' having 1-methylimidazolium halide group with lithium bis(trifluoromethanesulfonyl)imide)

To a glass reactor equipped with a stirrer, 10.0 g of lithium bis(trifluoromethanesulfonyl)imide dissolved in 300 ml of distilled water was added. Separately, 5.0 g of the polyether compound F' having a 1-methylimidazolium halide group obtained in Production Example 6' was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 11.4 g of a light brown viscous oily substance. From ¹H-NMR measurement and elemental analysis performed on the resulting light brown viscous oily substance, this was identified as an imidazolium structure-containing polyether compound F'' having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound F' having a 1-methylimidazolium halide group, as a starting raw material, which was obtained in Production Example 6'. For the resulting polyether compound F", the number average molecular weight (Mn) was 147,000, and the number of repeating units on average was 351 (351-mer) .

### [Production Example 7']

### (Quaternization of epichlorohydrin units in base polymer G with 1-methylimidazole)

To a glass reactor equipped with a stirrer and purged with argon, 8.0 g of the base polymer G obtained in Production Example G, 22.0 g of 1-methylimidazole, and 16.0 g of N,N-dimethylformamide were added, and were heated to 80°C. These materials were reacted at 80°C for 144 hours, and thereafter, were cooled to room temperature to stop the reaction. Part of the resulting reaction solution was extracted, and was dried in vacuo at 50°C for 120 hours, giving 14.6 g of a red brown resin-like substance. From ¹H-NMR measurement and elemental analysis performed on the resin-like substance, this was identified as a polyether compound G' having a 1-methylimidazolium halide group, in which all the chloro groups in the epichlorohydrin units in the base polymer G, as a starting raw material, which was obtained in Production Example G, were each substituted by a 1-methylimidazolium chloride group and all the bromo groups in the bromomethyl groups at the polymerization initiating ends were each substituted by a 1-methylimidazolium bromide group. For the resulting polyether compound G', the number average molecular weight (Mn) was 20,100, and the number of repeating units on average was 105 (105-mer).

### [Production Example 7'']

### (Anion exchange of polyether compound G' having 1-methylimidazolium halide group with lithium bis(trifluoromethanesulfonyl)imide)

To a glass reactor equipped with a stirrer, 10.0 g of lithium bis(trifluoromethanesulfonyl)imide dissolved in 300 ml of distilled water was added. Separately, 5.0 g of the polyether compound G' having a 1-methylimidazolium halide group obtained in Production Example 7' was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 11.1 g of a light brown viscous oily substance. From ¹H-NMR measurement and elemental analysis performed on the resulting light brown viscous oily substance, this was identified as an imidazolium structure-containing polyether compound G'' having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound G' having a 1-methylimidazolium halide group, as a starting raw material, which was obtained in Production Example 7'. For the resulting polyether compound G'', the number average molecular weight (Mn) was 48,300, and the number of repeating units on average was 105 (105-mer) .

### [Production Example 8']

### (Quaternization of epichlorohydrin units in base polymer H with 1-methylimidazole)

To a glass reactor equipped with a stirrer and purged with argon, 8.0 g of the base polymer H obtained in Production Example H, 22.0 g of 1-methylimidazole, and 16.0 g of N,N-dimethylformamide were added, and were heated to 80°C. These materials were reacted at 80°C for 144 hours, and thereafter, were cooled to room temperature to stop the reaction. Part of the resulting reaction solution was extracted, and was dried in vacuo at 50°C for 120 hours, giving 14.7 g of a red brown resin-like substance. From ¹H-NMR measurement and elemental analysis performed on the resin-like substance, this was identified as a polyether compound H' having a 1-methylimidazolium halide group, in which all the chloro groups in the epichlorohydrin units in the base polymer H, as a starting raw material, which was obtained in Production Example H, were each substituted by a 1-methylimidazolium chloride group and all the bromo groups in the bromomethyl groups at the polymerization initiating ends were each substituted by a 1-methylimidazolium bromide group. For the resulting polyether compound H', the number average molecular weight (Mn) was 104,000, and the number of repeating units on average was 606 (606-mer).

### [Production Example 8'']

### (Anion exchange of polyether compound H' having 1-methylimidazolium halide group with lithium bis(trifluoromethanesulfonyl)imide)

To a glass reactor equipped with a stirrer, 10.0 g of lithium bis(trifluoromethanesulfonyl)imide dissolved in 300 ml of distilled water was added. Separately, 5.0 g of the polyether compound H' having a 1-methylimidazolium halide group obtained in Production Example 8' was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 11.2 g of a light brown viscous oily substance. From ¹H-NMR measurement and elemental analysis performed on the resulting light brown viscous oily substance, this was identified as an imidazolium structure-containing polyether compound H'' having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound H' having a 1-methylimidazolium halide group, as a starting raw material, which was obtained in Production Example 8'. For the resulting polyether compound H'', the number average molecular weight (Mn) was 240,000, and the number of repeating units on average was 606 (606-mer) .

### [Production Example 9']

### (Quaternization of base polymer C with 1-normal butylimidazole)

To a glass reactor equipped with a stirrer and purged with argon, 5.0 g of the base polymer C obtained in Production Example C, 13.4 g of 1-normal butylimidazole, and 10.0 g of acetonitrile were added, and were heated to 80°C. These materials were reacted at 80°C for 144 hours, and thereafter, were cooled to room temperature to stop the reaction. The obtained reaction product was washed with an equivalent-mass mixed solution of toluene/methanol/water, and then an organic phase containing 1-normal butylimidazole and toluene was removed. The aqueous phase was dried in vacuo at 50°C for 12 hours, giving 11.7 g of a light red solid. From ¹H-NMR measurement and elemental analysis performed on this solid, the solid was identified as a 1-normal butylimidazolium structure-containing polyether compound C'9 having a halide ion as a counter anion, in which all the chloro groups in the repeating units of the base polymer C as a starting raw material were each substituted by a 1-normal butylimidazolium chloride group and all the bromo groups in the bromomethyl groups at the polymerization initiating ends were each substituted by a 1-normal butylimidazolium bromide group. For the resulting polyether compound C'9, the number average molecular weight (Mn) was 12,700, and the number of repeating units on average was 58 (58-mer).

### [Production Example 9'']

### (Anion exchange of polyether compound C'9 with lithium bis(trifluoromethanesulfonyl)imide)

5.0 g of the polyether compound C'9 obtained in Production Example 9', 10.0 g of lithium bis(trifluoromethanesulfonyl)imide, and 20 mL of deionized water were added to a glass reactor equipped with a stirrer. These materials were reacted at room temperature for 30 minutes, followed by drying at 50°C for 12 hours. The resulting solid-liquid mixture was washed with water to remove inorganic salts, and then the liquid phase was extracted with acetone. The resulting toluene solution was dried in vacuo at 50°C for 12 hours, giving 10.5 g of a viscous liquid substance. From ¹H-NMR spectrum measurement and elemental analysis performed on the resulting viscous liquid substance, this was identified as a 1-normal butylimidazolium structure-containing polyether compound C''9 having a bis(trifluoromethanesulfonyl)imide anion as a counter anion, in which all the chloride ions and bromide ions in the polyether compound C'9 as a starting raw material were each exchanged with a bis(trifluoromethanesulfonyl)imide anion. For the resulting polyether compound C"9, the number average molecular weight (Mn) was 27,100, and the number of repeating units on average was 58 (58-mer).

### [Production Example 10']

### (Quaternization of base polymer D with 1-normal butylimidazole)

To a glass reactor equipped with a stirrer and purged with argon, 5.0 g of the base polymer D obtained in Production Example D, 13.4 g of 1-normal butylimidazole, and 10.0 g of acetonitrile were added, and were heated to 80°C. These materials were reacted at 80°C for 144 hours, and thereafter, were cooled to room temperature to stop the reaction. The obtained reaction product was washed with an equivalent-mass mixed solution of toluene/methanol/water, and then an organic phase containing 1-normal butylimidazole and toluene was removed. The aqueous phase was dried in vacuo at 50°C for 12 hours, giving 11.7 g of a light red solid. From ¹H-NMR measurement and elemental analysis performed on this solid, this was identified as a 1-normal butylimidazolium structure-containing polyether compound D'10 having a halide ion as a counter anion, in which all the chloro groups in the repeating units of the base polymer D as a starting raw material were each substituted by a 1-normal butylimidazolium chloride group and all the bromo groups in the bromomethyl groups at the polymerization initiating ends were each substituted by a 1-normal butylimidazolium bromide group. For the resulting polyether compound D'10, the number average molecular weight (Mn) was 25,100, and the number of repeating units on average was 116 (116-mer).

### [Production Example 10'']

### (Anion exchange of polyether compound D'10 with lithium bis(trifluoromethanesulfonyl)imide)

5.0 g of the polyether compound D'10 obtained in Production Example 10', 10.0 g of lithium bis(trifluoromethanesulfonyl)imide, and 20 mL of deionized water were added to a glass reactor equipped with a stirrer. These materials were reacted at room temperature for 30 minutes, followed by drying at 50°C for 12 hours. The resulting solid-liquid mixture was washed with water to remove inorganic salts, and then the liquid phase was extracted with acetone. The resulting toluene solution was dried in vacuo at 50°C for 12 hours, giving 10.5 g of a viscous liquid substance. From ¹H-NMR spectrum measurement and elemental analysis performed on the resulting viscous liquid substance, this was identified as a 1-normal butylimidazolium structure-containing polyether compound D''10 having a bis(trifluoromethanesulfonyl)imide anion as a counter anion, in which all the chloride ions and bromide ions in the polyether compound D'10 as a starting raw material were each exchanged with a bis(trifluoromethanesulfonyl)imide anion. For the resulting polyether compound D"10, the number average molecular weight (Mn) was 53,500, and the number of repeating units on average was 116 (116-mer).

### [Production Example 11']

### (Quaternization of normal butyldimethylamine with base polymer A)

To a glass reactor equipped with a stirrer and purged with argon, 5.0 g of the base polymer A obtained in Production Example A, 16.4 g of normal butyldimethylamine, and 10.0 g of acetonitrile were added, and were heated to 80°C. These materials were reacted at 80°C for 144 hours, and thereafter, were cooled to room temperature to stop the reaction. The obtained reaction product was washed with an equivalent-mass mixed solution of toluene/methanol/water, and then an organic phase containing normal butyldimethylamine and toluene was removed. The aqueous phase was dried in vacuo at 50°C for 12 hours, giving 10.2 g of a light red solid. From ¹H-NMR measurement and elemental analysis performed on this solid, the solid was identified as a normal butyldimethylammonium structure-containing polyether compound A'11 having a halide ion as a counter anion, in which all the chloro groups in the repeating units of the base polymer A as a starting raw material were each substituted by a normal butyldimethylammonium chloride group and all the bromo groups in the bromomethyl groups at the polymerization initiating ends were each substituted by a normal butyldimethylammonium bromide group. For the resulting polyether compound A'11, the number average molecular weight (Mn) was 2,120, and the number of repeating units on average was 11 (11-mer) .

### [Production Example 11'']

### (Anion exchange of polyether compound A'11 with lithium bis(trifluoromethanesulfonyl)imide)

5.0 g of the polyether compound A'11 obtained in Production Example 11', 10.0 g of lithium bis(trifluoromethanesulfonyl)imide, and 20 mL of deionized water were added to a glass reactor equipped with a stirrer. These materials were reacted at room temperature for 30 minutes, followed by drying at 50°C for 12 hours. The resulting solid-liquid mixture was washed with water to remove inorganic salts, and then the liquid phase was extracted with acetone. The resulting toluene solution was dried in vacuo at 50°C for 12 hours, giving 10.5 g of a viscous liquid substance. From ¹H-NMR spectrum measurement and elemental analysis performed on the resulting viscous liquid substance, this was identified as a normal butyldimethylammonium structure-containing polyether compound A''11 having a bis(trifluoromethanesulfonyl)imide anion as a counter anion, in which all the chloride ions and bromide ions in the polyether compound A'11 as a starting raw material were each exchanged with a bis(trifluoromethanesulfonyl)imide anion. For the resulting polyether compound A''11, the number average molecular weight (Mn) was 4,820, and the number of repeating units on average was 11 (11-mer).

### [Production Example 12']

### (Quaternization of base polymer C with normal butyldimethylamine)

To a glass reactor equipped with a stirrer and purged with argon, 5.0 g of the base polymer C obtained in Production Example C, 16.4 g of normal butyldimethylamine, and 10.0 g of acetonitrile were added, and were heated to 80°C. These materials were reacted at 80°C for 144 hours, and thereafter, were cooled to room temperature to stop the reaction. The obtained reaction product was washed with an equivalent-mass mixed solution of toluene/methanol/water, and then an organic phase containing normal butyldimethylamine and toluene was removed. The aqueous phase was dried in vacuo at 50°C for 12 hours, giving 10.1 g of a light red solid. From ¹H-NMR measurement and elemental analysis performed on this solid, the solid was identified as a normal butyldimethylammonium structure-containing polyether compound C'12 having a halide ion as a counter anion, in which all the chloro groups in the repeating units of the base polymer C as a starting raw material were each substituted by a normal butyldimethylammonium chloride group and all the bromo groups in the bromomethyl groups at the polymerization initiating ends were each substituted by a normal butyldimethylammonium bromide group. For the resulting polyether compound C'12, the number average molecular weight (Mn) was 11,200, and the number of repeating units on average was 58 (58-mer) .

### [Production Example 12'']

### (Anion exchange of polyether compound C'12 with lithium bis(trifluoromethanesulfonyl)imide)

5.0 g of the polyether compound C'12 obtained in Production Example 12', 10.0 g of lithium bis(trifluoromethanesulfonyl)imide, and 20 mL of deionized water were added to a glass reactor equipped with a stirrer. These materials were reacted at room temperature for 30 minutes, followed by drying at 50°C for 12 hours. The resulting solid-liquid mixture was washed with water to remove inorganic salts, and then the liquid phase was extracted with acetone. The resulting toluene solution was dried in vacuo at 50°C for 12 hours, giving 10.8 g of a viscous liquid substance. From ¹H-NMR spectrum measurement and elemental analysis performed on the resulting viscous liquid substance, this was identified as a normal butyldimethylammonium structure-containing polyether compound C"12 having a bis(trifluoromethanesulfonyl)imide anion as a counter anion, in which all the chloride ions and bromide ions in the polyether compound C'12 as a starting raw material were each exchanged with a bis(trifluoromethanesulfonyl)imide anion. For the resulting polyether compound C''12, the number average molecular weight (Mn) was 25,400, and the number of repeating units on average was 58 (58-mer).

### [Production Example 13']

### (Quaternization of base polymer D with normal butyldimethylamine)

To a glass reactor equipped with a stirrer and purged with argon, 5.0 g of the base polymer D obtained in Production Example D, 16.4 g of normal butyldimethylamine, and 10.0 g of acetonitrile were added, and were heated to 80°C. These materials were reacted at 80°C for 144 hours, and thereafter, were cooled to room temperature to stop the reaction. The obtained reaction product was washed with an equivalent-mass mixed solution of toluene/methanol/water, and then an organic phase containing normal butyldimethylamine and toluene was removed. The aqueous phase was dried in vacuo at 50°C for 12 hours, giving 10.0 g of a light red solid. From ¹H-NMR measurement and elemental analysis performed on this solid, the solid was identified as a normal butyldimethylammonium structure-containing polyether compound D'13 having a halide ion as a counter anion, in which all the chloro groups in the repeating units of the base polymer D as a starting raw material were each substituted by a normal butyldimethylammonium chloride group and all the bromo groups in the bromomethyl groups at the polymerization initiating ends were each substituted by a normal butyldimethylammonium bromide group. For the resulting polyether compound D'13, the number average molecular weight (Mn) was 22,500, and the number of repeating units on average was 116 (116-mer) .

### [Production Example 13'']

### (Anion exchange of polyether compound D'13 with lithium bis(trifluoromethanesulfonyl)imide)

5.0 g of the polyether compound D'13 obtained in Production Example 13', 10.0 g of lithium bis(trifluoromethanesulfonyl)imide, and 20 mL of deionized water were added to a glass reactor equipped with a stirrer. These materials were reacted at room temperature for 30 minutes, followed by drying at 50°C for 12 hours. The resulting solid-liquid mixture was washed with water to remove inorganic salts, and then the liquid phase was extracted with acetone. The resulting toluene solution was dried in vacuo at 50°C for 12 hours, giving 10.7 g of a viscous liquid substance. From ¹H-NMR spectrum measurement and elemental analysis performed on the resulting viscous liquid substance, this was identified as a normal butyldimethylammonium structure-containing polyether compound D''13 having a bis(trifluoromethanesulfonyl)imide anion as a counter anion, in which all the chloride ions and bromide ions in the polyether compound D'13 as a starting raw material were each exchanged with a bis(trifluoromethanesulfonyl)imide anion. For the resulting polyether compound D''13, the number average molecular weight (Mn) was 50,800, and the number of repeating units on average was 116 (116-mer).

### [Production Example 14']

### (Quaternization of base polymer F with normal butyldimethylamine)

To a glass reactor equipped with a stirrer and purged with argon, 5.0 g of the base polymer F obtained in Production Example F, 32.8 g of normal butyldimethylamine, and 10.0 g of acetonitrile were added, and were heated to 80°C. These materials were reacted at 80°C for 144 hours, and thereafter, were cooled to room temperature to stop the reaction. The obtained reaction product was washed with an equivalent-mass mixed solution of toluene/methanol/water, and then an organic phase containing normal butyldimethylamine and toluene was removed. The aqueous phase was dried in vacuo at 50°C for 12 hours, giving 10.0 g of a light red solid. From ¹H-NMR measurement and elemental analysis performed on this solid, the solid was identified as a normal butyldimethylammonium structure-containing polyether compound F'14 having a halide ion as a counter anion, in which all the chloro groups in the repeating units of the base polymer F as a starting raw material were each substituted by a normal butyldimethylammonium chloride group and all the bromo groups in the bromomethyl groups at the polymerization initiating ends were each substituted by a normal butyldimethylammonium bromide group. For the resulting polyether compound F'14, the number average molecular weight (Mn) was 68,000, and the number of repeating units on average was 351 (351-mer) .

### [Production Example 14'']

### (Anion exchange of polyether compound F'14 with lithium bis(trifluoromethanesulfonyl)imide)

5.0 g of the polyether compound F'14 obtained in Production Example 14', 10.0 g of lithium bis(trifluoromethanesulfonyl)imide, and 20 mL of deionized water were added to a glass reactor equipped with a stirrer. These materials were reacted at room temperature for 30 minutes, followed by drying at 50°C for 12 hours. The resulting solid-liquid mixture was washed with water to remove inorganic salts, and then the liquid phase was extracted with acetone. The resulting toluene solution was dried in vacuo at 50°C for 12 hours, giving 10.8 g of a viscous liquid substance. From ¹H-NMR spectrum measurement and elemental analysis performed on the resulting viscous liquid substance, this was identified as a normal butyldimethylammonium structure-containing polyether compound F''14 having a bis(trifluoromethanesulfonyl)imide anion as a counter anion, in which all the chloride ions and bromide ions in the polyether compound F'14 as a starting raw material were each exchanged with a bis(trifluoromethanesulfonyl)imide anion. For the resulting polyether compound F''14, the number average molecular weight (Mn) was 154,000, and the number of repeating units on average was 351 (351-mer).

### [Production Example 15']

### (Quaternization of base polymer B with 1-methylpyrrolidine)

To a glass reactor equipped with a stirrer and purged with argon, 4.0 g of the base polymer B obtained in Production Example B, 11.4 g of 1-methylpyrrolidine, and 8.0 g of N,N-dimethylformamide were added, and were heated to 80°C. These materials were reacted at 80°C for 144 hours, and thereafter, were cooled to room temperature to stop the reaction. The resulting reaction solution was dried in vacuo at 50°C for 120 hours, giving 7.7 g of a light brown resin-like substance. From ¹H-NMR measurement and elemental analysis performed on the resin-like substance, this was identified as a 1-methylpyrolidinium structure-containing polyether compound B'15 having a halide ion as a counter anion, in which all the chloro groups in the epichlorohydrin units in the base polymer B as a starting raw material were each substituted by a 1-methylpyrolidinium chloride group and all the bromo groups in the bromomethyl groups at the polymerization initiating ends were each substituted by a 1-methylpyrolidinium bromide group. For the resulting polyether compound B'15, the number average molecular weight (Mn) was 4,090, and the number of repeating units on average was 23 (23-mer).

### [Production Example 15'']

### (Anion exchange of polyether compound B'15 with lithium bis(trifluoromethanesulfonyl)imide)

300 ml of distilled water containing 26.0 g of lithium bis(trifluoromethanesulfonyl)imide dissolved therein was added to a glass reactor equipped with a stirrer. Separately, 7.7 g of the polyether compound B'15 obtained in Production Example 15' was dissolved in 100 ml of distilled water, and this solution was added dropwise to the glass reactor, and was allowed to react at room temperature for 30 minutes. After the reaction, a deposited light brown rubbery substance polyether compound was recovered, and was dissolved in acetone. Thereafter, the acetone solution was added dropwise to 300 ml of distilled water, and inorganic salts were removed by polymer coagulation. The rubbery substance obtained through coagulation was dried at 50°C for 12 hours, giving 18.0 g if a light brown rubbery substance. From the ¹H-NMR measurement and elemental analysis performed on the resulting light brown rubbery substance, it was identified as a pyrolidinium structure-containing polyether compound B''15 having a bis(trifluoromethanesulfonyl)imide anion as a counter anion, in which all the chloride ions of the 1-methylpyrolidinium chloride groups in the repeating units of the polyether compound B'15, as a starting raw material, which was obtained in Production Example 15', and all the bromide ions of the 1-methylpyrolidinium bromide groups at the polymerization initiating ends were each exchanged with a bis(trifluoromethanesulfonyl)imide anion. For the resulting polyether compound B''15, the number average molecular weight (Mn) was 9,710, and the number of repeating units on average was 23 (23-mer) .

### [Production Example 16']

### (Quaternization of base polymer C with 1-methylpyrrolidine)

To a glass reactor equipped with a stirrer and purged with argon, 4.0 g of the base polymer C obtained in Production Example C, 11.4 g of 1-methylpyrrolidine, and 8.0 g of N,N-dimethylformamide were added, and were heated to 80°C. These materials were reacted at 80°C for 144 hours, and thereafter, were cooled to room temperature to stop the reaction. The resulting reaction solution was dried in vacuo at 50°C for 120 hours, giving 7.6 g of a light brown resin-like substance. From ¹H-NMR measurement and elemental analysis performed on the resin-like substance, this was identified as a 1-methylpyrolidinium structure-containing polyether compound C'16 having a halide ion as a counter anion, in which all the chloro groups in the epichlorohydrin units in the base polymer C as a starting raw material were each substituted by a 1-methylpyrolidinium chloride group and all the bromo groups in the bromomethyl groups at the polymerization initiating ends were each substituted by a 1-methylpyrolidinium bromide group. For the resulting polyether compound C'16, the number average molecular weight (Mn) was 10,300, and the number of repeating units on average was 58 (58-mer).

### [Production Example 16'']

### (Anion exchange of polyether compound C'16 with lithium bis(trifluoromethanesulfonyl)imide)

300 ml of distilled water containing 26.0 g of lithium bis(trifluoromethanesulfonyl)imide dissolved therein was added to a glass reactor equipped with a stirrer. Separately, 7.7 g of the polyether compound C'16 obtained in Production Example 16' was dissolved in 100 ml of distilled water, and this solution was added dropwise to the glass reactor, and was allowed to react at room temperature for 30 minutes. After the reaction, a deposited light brown rubbery substance was recovered, and was dissolved in acetone. Thereafter, the acetone solution was added dropwise to 300 ml of distilled water, and inorganic salts were removed by polymer coagulation. The resulting reaction solution was dried in vacuo at 50°C for 12 hours, giving 18.0 g of a light brown rubbery substance. From the ¹H-NMR measurement and elemental analysis performed on the resulting light brown rubbery substance, it was identified as a pyrolidinium structure-containing polyether compound C''16 having a bis(trifluoromethanesulfonyl)imide anion as a counter anion, in which all the chloride ions of the 1-methylpyrolidinium chloride groups and all the bromide ions of the 1-methylpyrolidinium bromide groups at the polymerization initiating ends were each exchanged with a bis(trifluoromethanesulfonyl)imide anion in the repeating units of the polyether compound C'16, as a starting raw material, which was obtained in Production Example 16'. For the resulting polyether compound C"16, the number average molecular weight (Mn) was 24,500, and the number of repeating units on average was 58 (58-mer).

### [Production Example 17']

### (Quaternization of base polymer D with pyridine)

To a glass reactor equipped with a stirrer and purged with argon, 4.0 g of the base polymer D obtained in Production Example D, 13.6 g of pyridine, and 10.0 g of N,N-dimethylformamide were added, and were heated to 80°C. These materials were reacted at 80°C for 144 hours, and thereafter, were cooled to room temperature to stop the reaction. The resulting reaction solution was dried in vacuo at 50°C for 120 hours, giving 7.3 g of a light brown resin-like substance. From ¹H-NMR measurement and elemental analysis performed on the resin-like substance, this was identified as a pyridinium structure-containing polyether compound D'17 having a halide ion as a counter anion, in which all the chloro groups in the epichlorohydrin units in the base polymer D as a starting raw material were each substituted by a pyridinium chloride group and all the bromo groups in the bromomethyl groups at the polymerization initiating ends were each substituted by a pyridinium bromide group. For the resulting polyether compound D'17, the number average molecular weight (Mn) was 19,800, and the number of repeating units on average was 116 (116-mer) .

### [Production Example 17'']

### (Anion exchange of polyether compound D'17 with lithium bis(trifluoromethanesulfonyl)imide)

300 ml of distilled water containing 16.8 g of lithium bis(trifluoromethanesulfonyl)imide dissolved therein was added to a glass reactor equipped with a stirrer. Separately, 5.0 g of the polyether compound D'17 obtained in Production Example 17' was dissolved in 100 ml of distilled water, and this solution was added dropwise to the glass reactor, and was allowed to react at room temperature for 30 minutes. After the reaction, a deposited light brown rubbery substance was recovered, and was dissolved in acetone. Thereafter, the acetone solution was added dropwise to 300 ml of distilled water, and inorganic salts were removed by polymer coagulation. The resulting reaction solution was dried in vacuo at 50°C for 12 hours, giving 12.1 g of a light brown rubbery substance. From the ¹H-NMR measurement and elemental analysis performed on the resulting light brown rubbery substance, it was identified as a pyridinium structure-containing polyether compound D''17 having a bis(trifluoromethanesulfonyl)imide anion as a counter anion, in which all the chloride ions of the pyridinium chloride groups and all the bromide ions of the pyridinium bromide groups at the polymerization initiating ends were each exchanged with a bis(trifluoromethanesulfonyl)imide anion in the repeating units of the polyether compound D'17, as a starting raw material, which was obtained in Production Example 17'. For the resulting polyether compound D''17, the number average molecular weight (Mn) was 48,000, and the number of repeating units on average was 116 (116-mer).

### [Production Example 18']

### (Quaternization of base polymer A with pyridine)

To a glass reactor equipped with a stirrer and purged with argon, 4.0 g of the base polymer A obtained in Production Example A, 13.6 g of pyridine, and 10.0 g of N,N-dimethylformamide were added, and were heated to 80°C. These materials were reacted at 80°C for 144 hours, and thereafter, were cooled to room temperature to stop the reaction. The resulting reaction solution was dried in vacuo at 50°C for 120 hours, giving 7.3 g of a light brown resin-like substance. From ¹H-NMR measurement and elemental analysis performed on the resin-like substance, this was identified as a pyridinium structure-containing polyether compound A'18 having a halide ion as a counter anion, in which all the chloro groups in the epichlorohydrin units in the base polymer A as a starting raw material were each substituted by a pyridinium chloride group and all the bromo groups in the bromomethyl groups at the polymerization initiating ends were each substituted by a pyridinium bromide group. For the resulting polyether compound A'18, the number average molecular weight (Mn) was 1,950, and the number of repeating units on average was 11 (11-mer) .

### [Production Example 18'']

### (Anion exchange of polyether compound A'18 with lithium bis(trifluoromethanesulfonyl)imide)

300 ml of distilled water containing 16.8 g of lithium bis(trifluoromethanesulfonyl)imide dissolved therein was added to a glass reactor equipped with a stirrer. Separately, 5.0 g of the polyether compound A'18 obtained in Production Example 18' was dissolved in 100 ml of distilled water, and this solution was added dropwise to the glass reactor, and was allowed to react at room temperature for 30 minutes. After the reaction, the deposited light brown rubbery substance was recovered, and was dissolved in acetone. Thereafter, the acetone solution was added dropwise to 300 ml of distilled water, and inorganic salts were removed by polymer coagulation. The resulting reaction solution was dried in vacuo at 50°C for 12 hours, giving 12.1 g of a light brown rubbery substance. From the ¹H-NMR measurement and elemental analysis performed on the resulting light brown rubbery substance, it was identified as a pyridinium structure-containing polyether compound A''18 having a bis(trifluoromethanesulfonyl)imide anion as a counter anion, in which all the chloride ions of the pyridinium chloride groups and all the bromide ions of the pyridinium bromide groups at the polymerization initiating ends were each exchanged with a bis(trifluoromethanesulfonyl)imide anion in the repeating units of the polyether compound A'18, as a starting raw material, which was obtained in Production Example 18'. For the resulting polyether compound A''18, the number average molecular weight (Mn) was 4,730, and the number of repeating units on average was 11 (11-mer).

### [Production Example 19']

### (Partial quaternization of epichlorohydrin units in base polymer D with 1-methylimidazole)

To a glass reactor equipped with a stirrer and purged with argon, 10.0 g of the base polymer D obtained in Production Example D, 1.34 g of 1-methylimidazole, and 16.0 g of N,N-dimethylformamide were added, and were heated to 80°C. These materials were reacted at 80°C for 144 hours, and thereafter, were cooled to room temperature to stop the reaction. The resulting reaction solution was dried in vacuo at 50°C for 120 hours, giving 11.3 g of a red brown resin-like substance. From ¹H-NMR measurement and elemental analysis performed on the resin-like substance, this was identified as a polyether compound D'19 having a 1-methylimidazolium halide group and 86 mol% of a chloromethyl group, in which the chloro groups in 14 mol% of epichlorohydrin units in the base polymer D, as a starting raw material, which was obtained in Production Example D, were each substituted by a 1-methylimidazolium chloride group and all the bromo groups in the bromomethyl groups at the polymerization initiating ends were each substituted by a 1-methylimidazolium bromide group. For the resulting polyether compound D'19, the number average molecular weight (Mn) was 12,100, and the number of repeating units on average was 116 (116-mer) .

### [Production Example 19'']

### (Anion exchange of polyether compound D'19 having 1-methylimidazolium halide group and chloromethyl with lithium bis(trifluoromethanesulfonyl)imide)

300 ml of distilled water containing 5.0 g of lithium bis(trifluoromethanesulfonyl)imide dissolved therein was added to a glass reactor equipped with a stirrer. Separately, 5.0 g of the polyether compound D'19 having a 1-methylimidazolium halide group and a chloromethyl group, which was obtained in Production Example 17', was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 6.4 g of a light brown viscous oily substance. From ¹H-NMR measurement and elemental analysis performed on the resulting light brown viscous oily substance, this was identified as an imidazolium structure-containing polyether compound D''19 having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound D'19 having a 1-methylimidazolium halide group, as a starting raw material, which was obtained in Production Example 19'. For the resulting polyether compound D''19, the number average molecular weight (Mn) was 16,000, and the number of repeating units on average was 116 (116-mer).

### [Production Example 20']

### (Partial quaternization of epichlorohydrin units in base polymer D with 1-methylimidazole)

To a glass reactor equipped with a stirrer and purged with argon, 10.0 g of the base polymer D obtained in Production Example D, 2.68 g of 1-methylimidazole, and 16.0 g of N,N-dimethylformamide were added, and were heated to 80°C. These materials were reacted at 80°C for 144 hours, and thereafter, were cooled to room temperature to stop the reaction. The resulting reaction solution was dried in vacuo at 50°C for 120 hours, giving 13.3 g of a red brown resin-like substance. From ¹H-NMR measurement and elemental analysis performed on the resin-like substance, this was identified as a polyether compound D'20 having a 1-methylimidazolium halide group and 71 mol% of a chloromethyl group, in which the chloro groups in 29 mol% of epichlorohydrin units in the base polymer D as a starting raw material, which was obtained in Production Example D, were each substituted by a 1-methylimidazolium chloride group and all the bromo groups in the bromomethyl groups at the polymerization initiating ends were each substituted by a 1-methylimidazolium bromide group. For the resulting polyether compound D'20, the number average molecular weight (Mn) was 13,500, and the number of repeating units on average was 116 (116-mer) .

### [Production Example 20'']

### (Anion exchange of polyether compound D'20 having 1-methylimidazolium halide group and chloromethyl group with lithium bis(trifluoromethanesulfonyl)imide)

300 ml of distilled water containing 5.0 g of lithium bis(trifluoromethanesulfonyl)imide dissolved therein was added to a glass reactor equipped with a stirrer. Separately, 5.0 g of the polyether compound D'20 having a 1-methylimidazolium halide group and a chloromethyl group, which was obtained in Production Example 20', was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 8.0 g of a light brown viscous oily substance. From ¹H-NMR measurement and elemental analysis performed on the resulting light brown viscous oily substance, this was identified as an imidazolium structure-containing polyether compound D"20 having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound D'20 having a 1-methylimidazolium halide group, as a starting raw material, which was obtained in Production Example 20'. For the resulting polyether compound D"20, the number average molecular weight (Mn) was 21,700, and the number of repeating units on average was 116 (116-mer).

### [Production Example 21']

### (Partial quaternization of base polymer I by quaternization of epichlorohydrin units in base polymer I with 1-methylimidazole)

To a glass reactor equipped with a stirrer and purged with argon, 10.0 g of the base polymer I obtained in Production Example I, 1.34 g of 1-methylimidazole, and 16.0 g of N,N-dimethylformamide were added, and were heated to 80°C. These materials were reacted at 80°C for 144 hours, and thereafter, were cooled to room temperature to stop the reaction. The resulting reaction solution was dried in vacuo at 50°C for 120 hours, giving 11.4 g of a red brown resin-like substance. From ¹H-NMR measurement and elemental analysis performed on the resin-like substance, this was identified as a polyether compound 1'21 having a 1-methylimidazolium halide group and 89 mol% of methyl groups derived from propylene oxide units, in which chloro groups in 11 mol% of epichlorohydrin units in the base polymer I, as a starting raw material, which was obtained in Production Example I, were each substituted by a 1-methylimidazolium chloride group and all the bromo groups in the bromomethyl groups at the polymerization initiating ends were each substituted by a 1-methylimidazolium bromide group. For the resulting polyether compound I'21, the number average molecular weight (Mn) was 12,100, and the number of repeating units on average was 171 (171-mer).

### [Production Example 21'']

### (Anion exchange of polyether compound I'21 having 1-methylimidazolium halide group and methyl group derived from propylene oxide unit with lithium bis (trifluoromethanesulfonyl) imide)

300 ml of distilled water containing 5.0 g of lithium bis(trifluoromethanesulfonyl)imide dissolved therein was added to a glass reactor equipped with a stirrer. Separately, 5.0 g of the polyether compound I'21 having a 1-methylimidazolium halide group and a methyl group derived from the propylene oxide unit, which was obtained in Production Example 21', was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 6.4 g of a light brown viscous oily substance. From ¹H-NMR measurement and elemental analysis performed on the resulting light brown viscous oily substance, this was identified as an imidazolium structure-containing polyether compound I"21 having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound 1'21 having a 1-methylimidazolium halide group and a methyl group derived from the propylene oxide unit, as a starting raw material, which was obtained in Production Example 21'. For the resulting polyether compound I''21, the number average molecular weight (Mn) was 16,000, and the number of repeating units on average was 171 (171-mer).

### [Production Example 22']

### (Partial quaternization of base polymer J by quaternization of epichlorohydrin units in base polymer J with 1-methylimidazole)

To a glass reactor equipped with a stirrer and purged with argon, 10.0 g of the base polymer J obtained in Production Example J, 1.34 g of 1-methylimidazole, and 16.0 g of N,N-dimethylformamide were added, and were heated to 80°C. These materials were reacted at 80°C for 144 hours, and thereafter, were cooled to room temperature to stop the reaction. The resulting reaction solution was dried in vacuo at 50°C for 120 hours, giving 12.0 g of a red brown resin-like substance. From ¹H-NMR measurement and elemental analysis performed on the resin-like substance, this was identified as a polyether compound J'22 partially having a 1-methylimidazolium halide group in the ethylene oxide chains, in which the chloro groups in 12 mol% of epichlorohydrin units in the base polymer J, as a starting raw material, which was obtained in Production Example I, were each substituted by a 1-methylimidazolium chloride group and all the bromo groups in the bromomethyl groups at the polymerization initiating ends were each substituted by a 1-methylimidazolium bromide group. For the resulting polyether compound J'22, the number average molecular weight (Mn) was 18,100, and the number of repeating units on average was 303 (303-mer) .

### [Production Example 22'']

### (Anion exchange of polyether compound J'22 partially having 1-methylimidazolium halide group in ethylene oxide chains with lithium bis(trifluoromethanesulfonyl)imide)

300 ml of distilled water containing 5.0 g of lithium bis(trifluoromethanesulfonyl)imide dissolved therein was added to a glass reactor equipped with a stirrer. Separately, 5.0 g of the polyether compound J'22 partially having a 1-methylimidazolium halide group in the ethylene oxide chains, which was obtained in Production Example 22', was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 7.4 g of a light brown viscous oily substance. From ¹H-NMR measurement and elemental analysis performed on the resulting light brown viscous oily substance, this was identified as an imidazolium structure-containing polyether compound J''22 having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound J'22 partially having a 1-methylimidazolium halide group in the ethylene oxide chains, as a starting raw material, which was obtained in Production Example 22'. For the resulting polyether compound J''22, the number average molecular weight (Mn) was 26,200, and the number of repeating units on average was 303 (303-mer).

### [Production Example 23'']

### (Anion exchange of polyether compound A' having 1-methylimidazolium halide group with lithium tetrafluoroborate)

100 ml of distilled water containing 4.0 g of lithium tetrafluoroborate dissolved therein was added to a glass reactor equipped with a stirrer. Separately, 5.0 g of the polyether compound A' having a 1-methylimidazolium halide group obtained in Production Example 1' was dissolved in 50 ml of distilled water, and this solution was added dropwise to the glass reactor, and was allowed to react at room temperature for 30 minutes. After the reaction, a deposited light brown viscous oily substance was recovered, and was dissolved in acetonitrile. Thereafter, the acetonitrile solution was added dropwise to 300 ml of distilled water, and inorganic salts were removed by polymer coagulation. The light brown viscous oily substance obtained through coagulation was dried in vacuo at 50°C for 12 hours, thereby obtaining 6.4 g of a light brown resin-like substance. From ¹H-NMR measurement and elemental analysis performed on the resulting light brown viscous oily substance, this was identified as an imidazolium structure-containing polyether compound A"23 having a tetrafluoroborate anion as a counter anion, in which all the chloride ions in the 1-methylimidazolium chloride groups and all the bromide ions in the 1-methylimidazolium bromide groups at the polymerization initiating ends were each exchanged with a tetrafluoroborate anion in the repeating units of the polyether compound A' having a 1-methylimidazolium halide group, as a starting raw material, which was obtained in Production Example 1'. For the resulting polyether compound A''23, the number average molecular weight (Mn) was 2,490, and the number of repeating units on average was 11 (11-mer).

### [Production Example 24'']

### (Anion exchange of polyether compound C' having 1-methylimidazolium halide group with lithium tetrafluoroborate)

100 ml of distilled water containing 4.0 g of lithium tetrafluoroborate dissolved therein was added to a glass reactor equipped with a stirrer. Separately, 5.0 g of the polyether compound C' having a 1-methylimidazolium halide group obtained in Production Example 3' was dissolved in 50 ml of distilled water, and this solution was added dropwise to the glass reactor, and was allowed to react at room temperature for 30 minutes. After the reaction, a deposited light brown viscous oily substance was recovered, and was dissolved in acetonitrile. Thereafter, the acetonitrile solution was added dropwise to 300 ml of distilled water, and inorganic salts were removed by polymer coagulation. The light brown viscous oily substance obtained through coagulation was dried in vacuo at 50°C for 12 hours, thereby obtaining 6.4 g of a light brown resin-like substance. From ¹H-NMR measurement and elemental analysis performed on the resulting light brown viscous oily substance, this was identified as an imidazolium structure-containing polyether compound C"24 having a tetrafluoroborate anion as a counter anion, in which all the chloride ions in the 1-methylimidazolium chloride groups and all the bromide ions in the 1-methylimidazolium bromide groups at the polymerization initiating ends were each exchanged with a tetrafluoroborate anion in the repeating units of the polyether compound C' having a 1-methylimidazolium halide group, as a starting raw material, which was obtained in Production Example 3'. For the resulting polyether compound C"24, the number average molecular weight (Mn) was 13,100, and the number of repeating units on average was 58 (58-mer).

### [Production Example 25'']

### (Anion exchange of polyether compound B' having 1-methylimidazolium halide group with silver acetate)

600 ml of distilled water containing 4.8 g of silver acetate dissolved therein was added to a glass reactor equipped with a stirrer. Separately, 5.0 g of the polyether compound B' having a 1-methylimidazolium halide group obtained in Production Example 2' was dissolved in 50 ml of distilled water, and this solution was added dropwise to the glass reactor, and was allowed to react at room temperature for 30 minutes. After the reaction, a deposited silver chloride was removed by centrifugation and filtration, and water was distilled off. Further, the product was dried in vacuo at 50°C for 12 hours, giving 5.6 g of a light brown resin-like substance. From ¹H-NMR measurement and elemental analysis performed on the resulting light brown resin-like substance, this was identified as an imidazolium structure-containing polyether compound B"25 having an acetic acid anion as a counter anion, in which all the chloride ions in the 1-methylimidazolium chloride groups and all the bromide ions in the 1-methylimidazolium bromide groups at the polymerization initiating ends were each exchanged with an acetic acid anion in the repeating units of the polyether compound B' having a 1-methylimidazolium halide group, as a starting raw material, which was obtained in Production Example 2'. For the resulting polyether compound B''25, the number average molecular weight (Mn) was 4,480, and the number of repeating units on average was 23 (23-mer).

### [Production Example 26'']

### (Anion exchange of polyether compound C' having 1-methylimidazolium halide group with silver acetate)

600 ml of distilled water containing 4.8 g of silver acetate dissolved therein was added to a glass reactor equipped with a stirrer. Separately, 5.0 g of the polyether compound C' having a 1-methylimidazolium halide group obtained in Production Example 3' was dissolved in 50 ml of distilled water, and this solution was added dropwise to the glass reactor, and was allowed to react at room temperature for 30 minutes. After the reaction, a deposited silver chloride was removed by centrifugation and filtration, and water was distilled off. Further, the product was dried in vacuo at 50°C for 12 hours, giving 5.6 g of a light brown resin-like substance. From ¹H-NMR measurement and elemental analysis performed on the resulting light brown resin-like substance, this was identified as an imidazolium structure-containing polyether compound C"26 having an acetic acid anion having a counter anion, in which all the chloride ions in the 1-methylimidazolium chloride groups and all the bromide ions in the 1-methylimidazolium bromide groups at the polymerization initiating ends were each exchanged with an acetic acid anion in the repeating units of the polyether compound C' having a 1-methylimidazolium halide group, as a starting raw material, which was obtained in Production Example 3'. For the resulting polyether compound C"26, the number average molecular weight (Mn) was 11,500, and the number of repeating units on average was 58 (58-mer).

### [Production Example 27']

### (Quaternization of base polymer H with pyridine)

To a glass reactor equipped with a stirrer and purged with argon, 4.0 g of the base polymer H obtained in Production Example H, 13.6 g of pyridine, and 10.0 g of N,N-dimethylformamide were added, and were heated to 80°C. These materials were reacted at 80°C for 144 hours, and thereafter, were cooled to room temperature to stop the reaction. The resulting reaction solution was dried in vacuo at 50°C for 120 hours, giving 7.3 g of a light brown resin-like substance. From ¹H-NMR measurement and elemental analysis performed on the resin-like substance, this was identified as a pyridinium structure-containing polyether compound H'27 having a halide ion as a counter anion, in which all the chloro groups in the epichlorohydrin units in the base polymer H as a starting raw material were each substituted by a pyridinium chloride group and all the bromo groups in the bromomethyl groups at the polymerization initiating ends were each substituted by a pyridinium bromide group. For the resulting polyether compound H'27, the number average molecular weight (Mn) was 105,700, and the number of repeating units on average was 606 (606-mer) .

### [Production Example 27'']

### (Anion exchange of pyridinium structure-containing polyether compound H'27 with silver acetate)

600 ml of distilled water containing 4.9 g of silver acetate dissolved therein was added to a glass reactor equipped with a stirrer. Separately, 5.0 g of the pyridinium structure-containing polyether compound H'22,1 obtained in Production Example 27' was dissolved in 50 ml of distilled water, and this solution was added dropwise to the glass reactor, and was allowed to react at room temperature for 30 minutes. After the reaction, a deposited silver chloride was removed by centrifugation and filtration, and water was distilled off. Further, the product was dried in vacuo at 50°C for 12 hours, giving 5.7 g of a light brown resin-like substance. From ¹H-NMR measurement and elemental analysis performed on the resulting light brown resin-like substance, this was identified as a pyridinium structure-containing polyether compound H''27 having an acetic acid anion as a counter anion, in which all the chloride ions in the pyridinium groups and all the bromide ions in the pyridinium bromide groups at the polymerization initiating ends were each exchanged with an acetic acid anion in the repeating units of the pyridinium structure-containing polyether compound H'27, as a starting raw material, which was obtained in Production Example 27'. For the resulting polyether compound H''27, the number average molecular weight (Mn) was 120,000, and the number of repeating units on average was 606 (606-mer).

### [Production Example 28']

### (Partial quaternization of epichlorohydrin units in base polymer F with 1-methylimidazole)

To a glass reactor equipped with a stirrer and purged with argon, 10.0 g of the base polymer F obtained in Production Example 6, 2.68 g of 1-methylimidazole, and 16.0 g of N,N-dimethylformamide were added, and were heated to 80°C. These materials were reacted at 80°C for 144 hours, and thereafter, were cooled to room temperature to stop the reaction. The resulting reaction solution was dried in vacuo at 50°C for 120 hours, giving 13.3 g of a red brown resin-like substance. From ¹H-NMR measurement and elemental analysis performed on the resin-like substance, this was identified as a polyether compound F'28 having a 1-methylimidazolium halide group and 72 mol% of a chloromethyl group, in which the chloro groups in 28 mol% of epichlorohydrin units in the base polymer F, as a starting raw material, which was obtained in Production Example 6, were each substituted by a 1-methylimidazolium chloride group and all the bromo groups in the bromomethyl groups at the polymerization initiating ends were each substituted by a 1-methylimidazolium bromide group. For the resulting polyether compound F'28, the number average molecular weight (Mn) was 41,300, and the number of repeating units on average was 351 (351-mer) .

### [Production Example 28'']

### (Anion exchange of polyether compound F'28 having 1-methylimidazolium halide group and chloromethyl with lithium bis(trifluoromethanesulfonyl)imide)

300 ml of distilled water containing 5.0 g of lithium bis(trifluoromethanesulfonyl)imide dissolved therein was added to a glass reactor equipped with a stirrer. Separately, 5.0 g of the polyether compound F'28 having a 1-methylimidazolium halide group and a chloromethyl group obtained in Production Example 28' was dissolved in 50 ml of distilled water, and this solution was added dropwise to the glass reactor, and was allowed to react at room temperature for 30 minutes. After the reaction, a deposited light brown viscous oily substance was recovered, and was dissolved in acetone. Thereafter, the acetone solution was added dropwise to 300 ml of distilled water, and inorganic salts were removed by polymer coagulation. The light brown viscous oily substance obtained through coagulation was dried in vacuo at 50°C for 12 hours, thereby obtaining 8.0 g of a light brown viscous oily substance. From ¹H-NMR measurement and elemental analysis performed on the resulting light brown viscous oily substance, this was identified as an imidazolium structure-containing polyether compound F''28 having a bis(trifluoromethanesulfonyl)imide anion as a counter anion, in which all the chloride ions in the 1-methylimidazolium chloride groups and all the bromide ions in the 1-methylimidazolium bromide groups at the polymerization initiating ends were each exchanged with a bis(trifluoromethanesulfonyl)imide anion in the repeating units of the polyether compound F'28 having a 1-methylimidazolium halide group, as a starting raw material, which was obtained in Production Example 28'. For the resulting polyether compound F''28, the number average molecular weight (Mn) was 67,000, and the number of repeating units on average was 351 (351-mer).

### [Examples 1 to 19 and Comparative Examples 1 to 7]

According to the method of producing a polyether compound, as shown in Tables 1 to 2, the type of the base polymer and that of the onium-forming agent were selected, and the base polymer was subjected to quaternization, and then anion exchange, giving polyether compounds as carbon dioxide absorbers. Using the resulting carbon dioxide absorbers (polyether compounds), the amount of carbon dioxide absorption was measured, and the test 1 for drop off of the carbon dioxide absorber from the porous membrane was performed. The results are shown in Tables 1 to 2.

### [Examples 20 to 30 and Comparative Examples 8 to 11]

According to the method of producing a polyether compound, as shown in Table 3, the type of the base polymer and that of the onium-forming agent were selected, and the base polymer was subjected to quaternization, and then anion exchange, giving polyether compounds. Each of the resulting polyether compounds, 1-butyl-3-methylimidazolium bis(trifluoromethanesulfonyl)imide (BMImTFSI, viscosity at 25°C: 51 mPa·s, molecular weight: 419.36), 1-ethyl-1-methylpyrolidinium tetrafluoroborate (EMPyBF4, melting point: 294°C, molecular weight: 201.01), N,N-diethyl-N-methyl-N-(2-methoxyethyl)ammonium bis (trifluoromethanesulfonyl) imide (N221EtOMeTFSI, melting point: -91°C, specific gravity (density): 1.42 g/cm³(25 °C), molecular weight: 426.397), methyl ethyl ketone, tetraethylene glycol dimethyl ether, and tetraethylene glycol were mixed in the blending ratios shown in Table 3, thereby obtaining compositions as carbon dioxide absorbers. Using the resulting carbon dioxide absorbers (compositions), the amount of carbon dioxide absorption was measured, and the test 2 for drop off of the carbon dioxide absorber from the porous membrane was performed. The results are shown in Table 3.

In Tables 1 to 3, the abbreviations for types of onium-forming agent, types of counter anion, and the materials added to the composition are shown below.
MeIm: 1-methylimidazole
BuIm: 1-normal butylimidazole
nBuMe2N: normal butyldimethylamine
Pyridine: pyridine
Me-py: 1-methylpyrrolidine
TFSI: bis(trifluoromethanesulfonyl)imide anion
BF4: tetrafluoroborate anion
acetate: acetic acid anion
BMImTFSI: 1-butyl-3-methylimidazolium bis(trifluoromethanesulfonyl)imide
N221EtCMeTFSI: N,N-diethyl-N-methyl-N- (2-methoxyethyl) ammonium bis(trifluoromethanesulfonyl)imide
EMPyBF4: 1-ethyl-1-methylpyrolidinium tetrafluoroborate

### [Table 1]

**Table 1**

| | | Example 1 | Example 2 | Example 3 | Example 4 | Example 5 | Example 6 | Example 7 | Example 8 | Comp. Ex. 1 | Comp. Ex. 2 |
|---|---|---|---|---|---|---|---|---|---|---|---|
| Method of producing polyether compound | Type of base polymer | C | D | E | F | G | H | C | D | A | B |
| | Type of onium-forming agent | Melm | Melm | Melm | Melm | Melm | Melm | Bulm | Bulm | Melm | Melm |
| | Production Example where quaternization of base polymer is performed | 3' | 4' | 5' | 6' | 7' | 8' | 9' | 10' | 1' | 2' |
| | Production Example where anion exchange is performed | 3" | 4" | 5" | 6" | 7" | 8" | 9" | 10" | 1" | 2" |
| | Type of polyether compound | C" | D" | E" | F" | G" | H" | C"9 | D"10 | A" | B" |
| Polyether compound | Epichlorohydrin unit, mol% | | | | | | | | | | |
| | Unit represented by General Formula (2), mol% | 100 | 100 | 100 | 100 | 97 | 97 | 100 | 100 | 100 | 100 |
| | Glycidyl methacrylate unit, mol% | | | | | 3 | 3 | | | | |
| | Total number of repeating units | 58 | 116 | 169 | 351 | 105 | 606 | 58 | 116 | 11 | 23 |
| | Type of counter anion | TFSI | TFSI | TFSI | TFSI | TFSI | TFSI | TFSI | TFSI | TFSI | TFSI |
| Amount of CO2 absorption | Amount of CO2 absorption (1000hpa, mg-CO2/g) | 10 | 11 | 13 | 16 | 11 | 16 | 8 | 9 | 2 | 2 |
| | Amount of CO2 absorption (8000hpa, mg-CO2/g) | 150 | 160 | 165 | 170 | 150 | 165 | 110 | 115 | 10 | 12 |
| Drop off test | Test 1 for drop off of carbon dioxide absorber from porous membrane | B | A | A | A | A | A | B | A | C | C |

### [Table 2]

**Table 2**

| | | Example 9 | Example 10 | Example 11 | Example 12 | Example 13 | Example 14 | Example 15 | Example 16 | Example 17 | Example 18 | Example 19 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|---|---|---|---|---|
| Method of producing polyether compound | Type of base polymer | C | D | F | C | D | D | D | I | J | C | C | A | B | A | A | B |
| | Type of onium-forming agent | nBuMe2N | nBuMe2N | nBuMe2N | Me-py | Pyridine | Melm | Melm | Melm | Melm | Melm | Melm | nBuMe2N | Me-py | Pyridine | Melm | Melm |
| | Production Example where quaternization of base polymer is performed | 12' | 13' | 14' | 16' | 17' | 19' | 20' | 21' | 22' | 3' | 3' | 11" | 15' | 18' | 1' | 2' |
| | Production Example where anion exchange is performed | 12" | 13" | 14" | 16" | 17" | 19" | 20" | 21" | 22" | 24" | 26" | 11" | 15" | 18" | 23" | 25" |
| | Type of polyether compound | C"12 | D"13 | F"14 | C"16 | D"17 | D"19 | D"20 | I"21 | J"22 | C"24 | C"26 | A"11 | B"15 | A"18 | A"23 | B"25 |
| Polyether compound | Epichlorohydrin unit, mol% | | | | | | 86 | 71 | | | | | | | | | |
| | Unit represented by General Formula (2), mol% | 100 | 100 | 100 | 100 | 100 | 14 | 29 | 11 | 12 | 100 | 100 | 100 | 100 | 100 | 100 | 100 |
| | Glycidyl methacrylate unit, mol% | | | | | | | | | | | | | | | | |
| | Propylene oxide unit, mol% | | | | | | | | 89 | | | | | | | | |
| | Ethylene oxide unit, mol% | | | | | | | | | 88 | | | | | | | |
| | Total number of repeating units | 58 | 116 | 351 | 58 | 116 | 116 | 116 | 171 | 303 | 58 | 58 | 11 | 23 | 11 | 11 | 23 |
| | Type of counter anion | TFSI | TFSI | TFSI | TFSI | TFSI | TFSI | TFSI | TFSI | TFSI | BF4 | acetate | TFSI | TFSI | TFSI | BF4 | acetate |
| Amount of CO2 absorption | Amount of CO2 absorption (1000hpa, mg-CO2/g) | 10 | 12 | 15 | 8 | 11 | 5 | 6 | 7 | 8 | 7 | 15 | 1 | 1 | 1 | 1 | 2 |
| | Amount of CO2 absorption (8000hpa, mg-CO2/g) | 140 | 150 | 160 | 105 | 145 | 65 | 70 | 89 | 102 | 95 | 160 | 9 | 7 | 8 | 9 | 22 |
| Drop off test | Test 1 for drop off of carbon dioxide absorber from porous membrane | B | A | A | B | A | A | A | A | A | B | B | C | C | C | C | C |

Tables 1 to 2 show that the carbon dioxide absorbers comprising a polyether compound containing an average of 50 or more of specific repeating units represented by General Formula (1) per molecule and containing a repeating unit containing a nitrogen-containing cationic group represented by General Formula (2) had high carbon dioxide absorbency, and were less likely to drop off from the porous membranes when they were held by the porous membranes (Examples 1 to 19).

In contrast, the carbon dioxide absorbers comprising a polyether compound containing an average of less than 50 specific repeating units represented by General Formula (1) per molecule had poor carbon dioxide absorbency, and were more likely to drop off from the porous membranes when they were held by the porous membranes (Comparative Examples 1 to 7).

### [Table 3]

**Table 3**

| | | Exam ple 20 | Example 21 | Example 22 | Example 23 | Example 24 | Example 25 | Example 26 | Example 27 | Example 28 | Example 29 | Exam ple 30 | Comp. Ex. 8 | Comp. Ex. 9 | Comp. Ex. 10 | Comp. Ex. 11 |
|---|---|---|---|---|---|---|---|---|---|---|---|---|---|---|---|---|
| Method of producing polyether compound | Type of base polymer | F | F | F | C | F | H | H | F | F | F | H | A | A | A | A |
| | Type of onium-forming agent | Melm | Melm | Melm | Melm | nBuMe2N | Pyridine | Pyridine | Melm | Melm | Melm | Pyridine | Melm | Melm | Melm | Melm |
| | Production Example where quaternization of base polymer is performed | 6' | 6' | 6' | 3' | 14' | 27' | 27' | 28' | 6' | 6' | 27' | 1' | 1' | 1' | 1' |
| | Production Example where anion exchange is performed | 6" | 6" | 6" | 24" | 14" | 27" | 27" | 28" | 6" | 6" | 27" | 1" | 1" | 1" | 1" |
| | Type of polyether compound | F" | F" | F" | C"24 | F"14 | H"27 | H"27 | F"28 | F" | F" | H"27 | A" | A" | A" | A" |
| Polyether compound | Epichlorohydrin unit, mol% | | | | | | | | 72 | | | | | | | |
| | Unit represented by General Formula (2), mol% | 100 | 100 | 100 | 100 | 100 | 97 | 97 | 28 | 100 | 100 | 97 | 100 | 100 | 100 | 100 |
| | Glycidyl methacrylate unit, mol% | | | | | | 3 | 3 | | | | 3 | | | | |
| | Total number of repeating units | 351 | 351 | 351 | 58 | 351 | 606 | 606 | 351 | 351 | 351 | 606 | 11 | 11 | 11 | 11 |
| | Type of counter anion | TFSI | TFSI | TFSI | BF4 | TFSI | acetate | acetate | TFSI | TFSI | TFSI | acetate | TFSI | TFSI | TFSI | TFSI |
| Blending ratios of composition | Polyether compound, wt% | 50 | 10 | 70 | 90 | 50 | 10 | 50 | 50 | 30 | 30 | 20 | 50 | 10 | 50 | 10 |
| | BMImTFSI, wt% | 50 | 90 | | | | | | | | 20 | | 50 | 90 | | |
| | EMPyBF4, wt% | | | 30 | | 50 | 90 | | | | | | | | | |
| | N221EtOMeTFSI, wt% | | | | 10 | | | 50 | | | | | | | | |
| | Methyl Ethyl Ketone, wt% | | | | | | | | 25 | 20 | 20 | | | | 25 | 45 |
| | Tetraethylene glycol dimethyl ether, wt% | | | | | | | | | 50 | 30 | 30 | | | | |
| | Tetraethylene glycol, wt% | | | | | | | | 25 | | | 50 | | | 25 | 45 |
| Amount of CO2 absorption | Amount of CO2 absorption (1000hpa, mg-CO2/g) | 9 | 6 | 10 | 8 | 8 | 8 | 12 | 5 | 4 | 5 | 5 | 1 | 0.5 | 0.5 | 0.5 |
| | Amount of CO2 absorption (8000hpa, mg-CO2/g) | 90 | 65 | 115 | 78 | 86 | 95 | 135 | 45 | 40 | 43 | 45 | 8 | 4 | 5 | 2 |
| Drop off test | Test 1 for drop off of carbon dioxide absorber from porous membrane | ○ | ○ | ○ | ○ | ○ | ○ | ○ | ○ | ○ | ○ | ○ | × | × | × | × |

Table 3 shows that the carbon dioxide absorbers comprising a polyether compound containing an average of 50 or more specific repeating units represented by General Formula (1) per molecule and containing a repeating unit containing a nitrogen-containing cationic group represented by General Formula (2) had high carbon dioxide absorbency, and were less likely to drop off from the porous membranes when they were held by the porous membranes (Examples 20 to 30).

In contrast, the carbon dioxide absorbers comprising a polyether compound containing an average of less than 50 specific repeating units represented by General Formula (1) per molecule had poor carbon dioxide absorbency, and were more likely to drop off from the porous membranes when they were held by the porous membranes (Comparative Examples 8 to 11) .

## Claims

1. A carbon dioxide absorber comprising a polyether compound,
wherein the polyether compound contains an average of 50 or more repeating units represented by General Formula (1) below per molecule, and
the polyether compound contains a repeating unit represented by General Formula (2) below as at least part of the repeating units represented by General Formula (1): 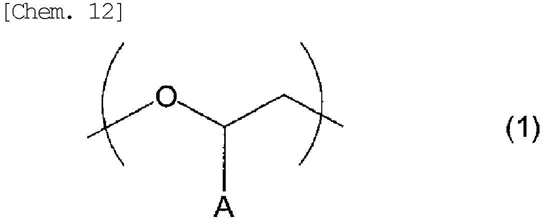 (where in General Formula (1), A represents a monovalent group); and 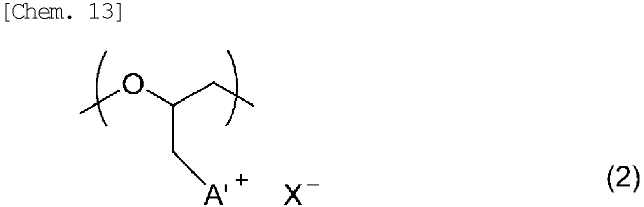 (where in General Formula (2), A'⁺ represents a nitrogen-containing cationic group; and in General Formula (2), X⁻ represents an anion).

2. The carbon dioxide absorber according to claim 1, wherein the repeating unit represented by General Formula (2) is a repeating unit represented by General Formula (3-1) below, a repeating unit represented by General Formula (3-2) below, or a repeating unit represented by General Formula (4) below: 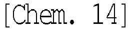 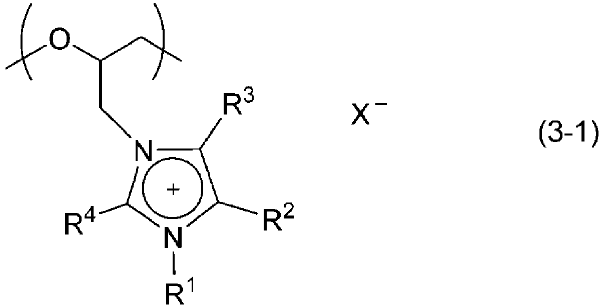 (where in General Formula (3-1), R¹ to R⁴ each independently represent a hydrogen atom or a substituent, and R² and R³ may be bonded to each other; and in General Formula (3-1), X⁻ represents an anion); 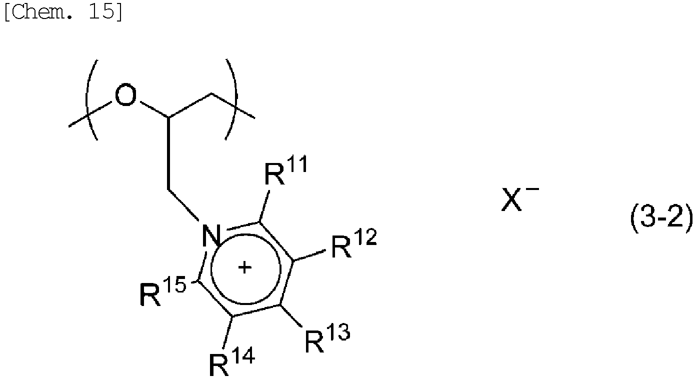 (where in General Formula (3-2), R¹¹ to R¹⁵ each independently represent a hydrogen atom or a substituent, and any two selected from R¹¹ to R¹⁵ may be bonded to each other; and in General Formula (3-2), X⁻ represents an anion); and 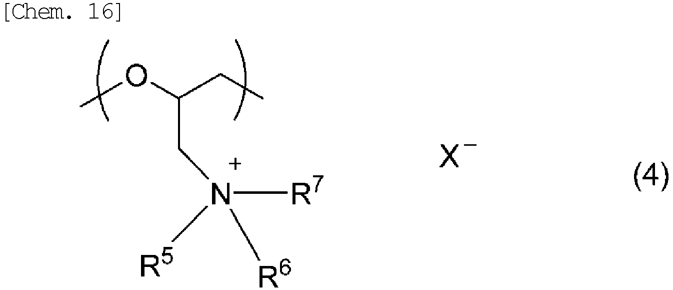 (where in General Formula (4), R⁵ to R⁷ each independently represent a hydrogen atom or a substituent, and R⁶ and R⁷ may be bonded to each other; and in General Formula (4), X⁻ represents an anion) .

3. The carbon dioxide absorber according to claim 1 or 2, wherein the polyether compound contains an average of 101 or more repeating units represented by General Formula (1) per molecule.

4. The carbon dioxide absorber according to any one of claims 1 to 3, wherein the proportion of the repeating units represented by General Formula (1) in the polyether compound is 90 to 100 mol% relative to the entire repeating units in the polyether compound.

5. The carbon dioxide absorber according to any one of claims 1 to 4, wherein the proportion of the repeating unit represented by General Formula (2) in the polyether compound is 5 to 100 mol% relative to the entire repeating units represented by General Formula (1).

6. The carbon dioxide absorber according to any one of claims 1 to 5, further comprising an ion liquid or an oxygen-containing polar organic solvent.

7. The carbon dioxide absorber according to any one of claims 1 to 6, wherein in the General Formula (2), X⁻ each independently represents an anion selected from the group consisting of halide ions, sulfonyl imidide ions, carboxylate ions, sulfonate ions, OH⁻, BF₄⁻, PF₆⁻, ClO₄⁻, B (CN)₄⁻, SCN⁻, and (NC)₂N⁻.
